(19) Europäisches Patentamt
European Patent Office
Office européen des brevets

(11) **EP 1 311 639 B1**

(12) **EUROPÄISCHE PATENTSCHRIFT**

(45) Veröffentlichungstag und Bekanntmachung des Hinweises auf die Patenterteilung:
**19.10.2005 Patentblatt 2005/42**

(51) Int Cl.[7]: **C09D 175/14**, C08G 18/08, C08G 18/12, C08G 18/40, C08G 18/66, C08G 18/68

(21) Anmeldenummer: **01958062.0**

(22) Anmeldetag: **08.08.2001**

(86) Internationale Anmeldenummer:
**PCT/EP2001/009177**

(87) Internationale Veröffentlichungsnummer:
**WO 2002/012407 (14.02.2002 Gazette 2002/07)**

(54) **BESCHICHTUNGSSYSTEM FÜR FURNIERHOLZ AUF BASIS VON POLYURETHAN-DISPERSIONEN, VERFAHREN ZU SEINER HERSTELLUNG UND SEINE VERWENDUNG**

COATING SYSTEM FOR VENEERED WOOD BASED ON POLYURETHANE DISPERSIONS METHOD FOR THE PRODUCTION AND USE THEREOF

SYSTEME DE REVETEMENT A BASE DE DISPERSIONS DE POLYURETHANNE POUR CONTREPLAQUE, SON PROCEDE DE PRODUCTION ET SON UTILISATION

(84) Benannte Vertragsstaaten:
**AT BE CH CY DE DK ES FI FR GB GR IE IT LI LU MC NL PT SE TR**

(30) Priorität: **09.08.2000 DE 10038958**

(43) Veröffentlichungstag der Anmeldung:
**21.05.2003 Patentblatt 2003/21**

(73) Patentinhaber: **Construction Research & Technology GmbH**
**83308 Trostberg (DE)**

(72) Erfinder:
• **MAIER, Alois**
**84549 Engelsberg (DE)**
• **INGRISCH, Stefan**
**83358 Seebruck (DE)**
• **KERN, Alfred**
**84558 Kirchweidach (DE)**
• **HUBER, Christian**
**83308 Trostberg (DE)**
• **RASPL, Sascha**
**84518 Garching (DE)**
• **HILLER, Wolfgang**
**72070 Tübingen (DE)**
• **STADLER, Rupert**
**87719 Mindelheim (DE)**

(74) Vertreter: **Weiss, Wolfgang et al**
**Weickmann & Weickmann**
**Patentanwälte**
**Kopernikusstrasse 9**
**81679 München (DE)**

(56) Entgegenhaltungen:
**EP-A- 0 473 169          DE-A- 19 719 925**

• **DATABASE WPI Section Ch, Week 198528 Derwent Publications Ltd., London, GB; Class A82, AN 1985-167744 XP002183056 & JP 60 096404 A (MATSUSHITA ELECTRIC WORKS LTD), 30. Mai 1985 (1985-05-30)**

## Beschreibung

Die vorliegende Erfindung betrifft ein flexibles und/oder postformingfähiges Beschichtungssystem für Furnierholz und weitere Beschichtungsmaterialien auf Basis von Polyurethan-Dispersionen, Verfahren zu seiner Herstellung und dessen Verwendung.

Das Postforming-Direktverfahren für melaminbeschichtete Holzwerkstoffplatten ist seit geraumer Zeit Stand der Technik. Weiterentwicklungen des Verfahrens und Innovationen im Werkzeug- und Maschinenbereich ermöglichen heute auch die Herstellung furnierbeschichteter Platten im Postforming-Direktverfahren. Der polykristalline Diamantschneidstoff (PKD) leistet dabei einen wichtigen Beitrag.

Furniere sind aus Vollholz durch unterschiedliche Schneidearten hergestellte Holzschichten mit 0,3 bis 10 mm Dicke. Die dünneren dekorativen Deckfurniere ("Edelfurniere") werden auf dem zu verdeckenden Blindmaterial (Holzwerkstoffe, z.B. Spanplatten oder Hartfaserplatten u.ä.) einseitig oder zweiseitig flächig verleimt und vermitteln dadurch den Eindruck von Massivholz. Der Begriff "Furnierholz" kennzeichnet daher Verbundmaterialien aus Furnier und Holzwerkstoffen.

Die Weiterentwicklung des mehrstufigen Postforming-Verfahrens zum Postforming-Direktverfahren führte bei der Homag Maschinenbau AG in Schopfloch zum Bau von speziell dafür geeigneten Maschinen, die der Verwendung von Furnier anstelle von gebräuchlichen Laminaten angepasst sind. Sie gewährleisten unter anderem ein einfacheres Handling der zu bearbeiteten Platten, schnellere und einfachere Produktionsabläufe und den Wegfall einer Zwischenlagerung.

Die Herstellung eines Postformingelements geschieht in einem Arbeitsgang. Die spanende Bearbeitung erfolgt dabei in mehreren Schritten unter Einsatz mehrerer PKD-Werkzeuge. In einem ersten Schritt wird der entsprechende Kantenbereich der Trägerplatte bis auf einen Rest von etwa 3 mm zerspant. Ein PKD-Kombinationswerkzeug mit 250 mm Durchmesser trägt im nächsten Arbeitsgang das verbliebene Material bis auf die Furnierbeschichtung ab und fräst einen Profilradius von unten am Übergang von der Trägerplatte zur Beschichtung vor. Die Bearbeitung muss im Gleichlauf erfolgen, da sonst die Furnierfaser durch das Werkzeug erfasst und das Furnier beschädigt werden kann.

Von besonderer Bedeutung für die spätere Leimaufnahme ist das Ausspitzen des Werkstücks am Übergang von der Trägerplatte zur Beschichtung. Kommt normalerweise ein Werkzeug mit einer Breite von 1,75 mm zur Anwendung, so wird bei furnierbeschichteten Elementen ein speziell entwickeltes PKD-Werkzeug mit deutlich reduzierter Werkzeugbreite eingesetzt. Die Bearbeitung erfolgt bei 9000 U/min, wobei die Schnitttiefe in Abhängigkeit vom Profilradius gewählt werden kann. Die Vorschubgeschwindigkeit wird bei allen Operationen generell zwischen 14 und 25 m/min gewählt. Trotz der hohen Flankenbelastung und der damit verbundenen hohen thermischen Beanspruchung der Schneidkanten liegt der Standweg bei 25000 lfm Schnittlänge. Abgeschlossen wird die spanende Bearbeitung durch den Einsatz eines PKD-Abplattwerkzeugs, mit dem die Deckschicht abgefräst wird, sowie mit dem Einsatz eines weiteren Radius- und Profilfräsers zum Fräsen der oberen Profilkante.

In einem abschließenden Kleberauftrags-Teil der Maschine wird im unteren Radiusbereich der bearbeitenden Kante am Übergang zwischen Spanplatte und Furnier eine Schmelzkleberraupe aufgetragen. Im Gegensatz zu dem ansonsten gebräuchlichen PVAc-Kleber, der bei Furnier wegen des hohen Wasseranteils zu Rissbildung während der Trocknung führt, werden EVA/PO-Schmelzkleber eingesetzt. Durch den Einsatz einer speziell entwickelten Benetzungseinrichtung wird die Furnierfaser vorbehandelt, um eine Verformung ohne Rückkaschierung zu erreichen. Die Verwendung von Schlitzdüsen bei Leimauftrag ermöglicht es, auch schwierige Profilgeometrien zu realisieren. Nach dem Leimauftrag wird das Furnier aktiviert und belüftet. In der sich anschließenden Druckzone wird das überstehende Furnier verformt und an die profilierte Spanplatte angedrückt. Dabei werden Druckschuhe in Kombination mit Rollen eingesetzt. Ein Nachbearbeitungsteil bildet den Abschluss der "Postforming-Direktmaschine".

Nach dem Direktpostformingverfahren werden die furnierbeschichteten Spanplatten also in einer Einspannung im Durchlauf formatiert und postformatiert.

Verfahrensbeschreibung:

1. Klebstoffe zum Beschichten des Furniers auf die Spanplatte:

Der zur Flächenverklebung verwendete Klebstoff hat folgende Funktion:

a) Der Klebstoff verhindert das Durchdringen der von außen aufgebrachten Feuchtigkeit nach innen. Dadurch wird eine gute Benetzung des mit der Leimwalze aufgebrachten Schmelzklebers erreicht.

b) Der Klebstoff unterstützt den Zusammenhalt von offenporigen Furnieren.

- Als Klebstoff wird Harnstoffleim mit max. 20 % PVAC-Zusatz verwendet.
- Die Leimauftragsmenge beträgt ca. 100 - 120 $g \cdot m^{-2}$. Bei der Flächenverpressung muss darauf geachtet werden, dass der Leimdurchschlag (Leim der durch das Furnier auf die Oberfläche durchdringt) möglichst gering ist.

2. Zerspanung der Spanplatte bis zur richtigen Furnierstärke:

Das Furnier wird von unten mit einem Stirnplanfräser um ca. 0,1 mm auf eine Furnierstärke von ca. 0,6 mm abgeplattet.

Grund:

- Abfräsen des Leimdurchschlags
- Aufrauen des Furniers für bessere Benetzung
- Reduzierung der Oberflächenspannung
- durchgehend gleiche Furnierdicke

3. Erreichen des geeigneten Feuchtigkeitsgrades zur Profilierung der Platten und Verformen des Furniers:

a) Beim Profilieren der beschichteten Platten sollte das Furnier eine Feuchtigkeit von ca. 8 % haben, um ein Aussplittern zu vermeiden. Ein zu hoher Feuchtigkeitsgehalt ist nachteilig, da das Furnier infolge Eigenspannung (d. h. Feuchtigkeitsunterschied Innen-Außenseite) zum "Aufstehen" neigt und beim Fräsen von der Schneide erfasst und danach abgerissen wird.

b) Zum Verformen des Furniers wird eine Furnierfeuchtigkeit von ca. 12 % benötigt.

Daraus ergibt sich folgende Vorgehensweise:

Zu a) Hat das Furnier, wenn es zur Maschine kommt, weniger als 8 % Feuchtigkeit, muss dem Furnier die fehlende Feuchtigkeit durch eine Bedampfungseinheit am Einlauf zugeführt werden, oder es wird in einem Klimaraum gelagert (vorbereitet).

Zu b) Die notwendige Feuchtigkeit zur Verformung wird in der Maschine erreicht. Durch ein beheiztes Wasserauftragsbecken mit Auftragswalzen wird das heiße Wasser in das Furnier eingewalzt. Durch eine nachfolgende Heizzone wird die Feuchtigkeitsaufnahme verstärkt. Um eine Feuchtigkeit von 12 % zu erreichen, ist es erforderlich, dass Wasserauftrags- und Heizzone zweimal hintereinander aufgebaut sind.

4. Geometrie des Fertigteilproduktes:

Je geringer der Biegeradius, desto höher ist die Spannung im Furnier.

Bei gut verformbaren Furnieren (z. B. Buche) liegt der kleinste Biegeradius bei ca. R = 5 mm
Bei schlechteren Furnieren (z. B. Eiche) liegt der kleinste Biegeradius bei ca. R = 6 mm

5. Leimauftrag zur Verklebung des Furnierüberstandes:

Die Verleimung des Furnierüberstandes muss mit Schmelzkleber erfolgen, da bei PVAC-Verleimung durch die Ablüftung des Klebers das Furnier zu trocken wird und es zur Rissbildung kommt.
Die Aufbringung des Schmelzklebers auf die Rückseite erfolgt durch eine horizontale Leimauftragswalze.
Für die Flächenverleimung können alle gängigen Soft-Postforming-Schmelzklebersorten verwendet werden.
Die Einbringung des Schmelzklebers in den Hohlraum erfolgt durch eine Spritzdüse.
Für den Hohlraum haben sich wegen ihrer kurzen Erstarrungszeit bei trotzdem noch vorhandener Flexibilität weiche Polyamid-Sorten bewährt.
Grundsätzlich muss dafür gesorgt werden, dass der Hohlraum am Radiusauslauf zur Spannplatte so klein wie möglich ist. Es muss unbedingt vermieden werden, dass zuviel Kleber in den Hohlraum eingespritzt wird, da dies beim Verformen zum "Aufbürsten" des Furniers führt.

6. Die Verformung des Furniers:

Der kritische Bereich beim Umlegen und Anpressen des Furnierüberstandes ist der untere Radius im Bereich des mit Schmelzkleber gefüllten Hohlraumes. Der untere Radiusbereich muss durchgehend mit Formschuhen gehalten werden, um ein Reißen des Furniers zu verhindern. Die Druckzone ist folgendermaßen aufgebaut.

a) Biegestab und Formrolle zum Vorformen des Furniers und Anheben auf die Formschuhe.
b) 6 Schuhe in 15 °, Abstufung 15 - 90 °, zum Umlegen und Anpressen des Furniers.
c) Danach folgen seitlich durchweg gerade Rollen mit Abstreifer V2A-Stahl zum seitlichen Anpressen des Furniers auf der Schmalseite.
d) Im Bereich des Hohlraums sitzen durchweg Formschuhe, die den Radius 90 ° umschließen.
e) Der obere Radius wird mittels Biegestab und Gummiformrollen umgelegt.
f) Danach folgen gerade, von oben auf die Einlegetiefe einstellbare, Anpressrollen.

7. Einlegetechnik bei U-Profil.

Um das Furnier in der Deckfläche mit möglichst unsichtbarer Fuge einlegen zu können, wird in der Druckzone mittels einer Säge das Furnier angeritzt und anschließend über Druckrollen eingedrückt. Die Ritzsäge arbeitet dabei im Gleichlauf.

Mit UV-Lacken kann Holz, ähnlich wie mit Wasserlacken, besonders umweltschonend lackiert werden. UV steht für ultraviolett und bezeichnet die Art der Lackhärtung. Die dabei ablaufende chemische Reaktion wird durch energiereiches UV-Licht in Gang gesetzt: Sogenannte Photoinitiatoren nehmen Lichtenergie auf und zerfallen in reaktionsfreudige Spaltprodukte, die eine rasche Kettenreaktion auslösen - der Lackfilm härtet in nur wenigen Sekunden völlig aus. Das Verfahren der UV-Härtung ist in lösemittelhaltigen und in wasserbasierenden Lacksystemen zu finden. Letztere werden zumeist als UV-Spritzlacke angewendet, weil damit die Lösemittelemissionen in der Produktion minimiert werden. Auf ebenen Flächen können per Walze sogar völlig lösemittelfrei UV-Lacke aufgetragen werden. Ein Überblick über Chemie und Technologie der Strahlenhärtung wird in P. G. Garratt, "Strahlenhärtung" (Herausgeber: U. Zorll), Verlag: Curt R. Vincentz, Hannover gegeben.

UV-Lacke zeichnen sich durch extrem widerstandsfähige Filme aus. Unmittelbar nach der Härtung hat die Lackoberfläche bereits ihre Eigenschaften erreicht: Die Bauteile sind sofort verpackungs- oder weiterbearbeitungsfähig. Nahezu alle Produkte erfüllen die VdL-Richtlinie 02 sowie die Möbelnorm nach DIN 68861 (EN 12720). Ihr Einsatz ist ausschließlich für die Serienproduktion bestimmt.

Wie weit die UV-Härtung bereits Standardproduktionsmethode geworden ist, lässt sich anhand zahlreicher Beispiele erläutern. So werden neben Wohn- und Schlafzimmermöbeloberflächen, Tischplatten, Küchenfronten, Türen und Paneelen auch schon ganze Stühle bzw. Sesselgestelle sowie andere Profile und Korpusteile mit UV-härtenden Lacken im Walz-, Gieß-und Spritzverfahren lackiert und gehärtet, zudem Fertigparkette und Dielenbretter mit solchen hochwiderstandsfähigen Systemen beschichtet.

Konventionelle strahlenhärtende Beschichtungssysteme enthalten häufig Lösemittel und/oder Monomere (Reaktivverdünner). Eine umweltfreundliche Alternative dazu stellen wässerige strahlenhärtende Beschichtungssysteme dar, die sich jedoch im Bereich der industriellen Anwendung (Holzveredelungs- und Möbelindustrie) erst langsam durchsetzen.

Derzeit sind am Markt verschiedene wässrige strahlenhärtende Bindemittelsysteme erhältlich. Sie können prinzipiell in zwei Klassen unterteilt werden, und zwar einerseits in wasserlöslich oder wasserverdünnbar sowie Emulsionen und andererseits in kolloidale Dispersionen. Im Gegensatz zu den konventionellen Systemen lassen sich die wässrigen Systeme nicht unmittelbar nach dem Lackauftrag aushärten. Voraussetzung für raschen Härtungsbeginn ist schnelles und komplettes Abdunsten des Wassers aus dem aufgetragenen Film. Die Abdunstung erfordert Energie, Platz und Zeit. Unmittelbar nach der Wasserabgabe aber kann die Härtung stattfinden.

Trotzdem bieten wässrige strahlenhärtende Beschichtungssysteme eine Reihe von ökologischen, physiologischen und nicht zuletzt anwendungstechnischen Vorteilen:

- geringe oder keine Emissionen
- keine Hautreizung, keine Sensibilisierung, kein Geruch
- Verringerung der Brand- und Explosionsgefahr
- Auftrag mit herkömmlichen Lackauftragsmaschinen
- Reinigen der Auftragsmaschinen sowie Entfernen verschütteten Lacks mit Wasser
- physikalische Trocknung vor der Aushärtung, d.h. Ausbesserung der Filme möglich
- Viskositätseinstellung mit Wasser und/oder Rheologieadditiven
- neue Formulierungsmöglichkeiten, d.h. niedriger Filmschrumpf infolge Abwesenheit von Monomeren

EP 1 311 639 B1

- Formulierung von Lacksystemen mit niedrigem Festkörper (ohne Mitanwendung organischer Lösemittel)

Die Oberflächenvergütung des Furnierholzes mit strahlenhärtenden Beschichtungssystemen erfolgt gemäss dem bekannten Stand der Technik erst nach dem Direktpostformingverfahren.

Bei der bisherigen Vorgehensweise erfolgt die Beschichtung des postgeformten Furnierholzes also in zwei getrennten Stufen. In der ersten Stufe wird die postgeformte Kante des Furnierholzes beschichtet. In der zweiten Stufe wird die nicht postgeformte Fläche des Furnierholzes beschichtet. Bei der ersten Stufe kann noch zwischen Walzauftrag und Spritzauftrag unterschieden werden. Diese Vorgehensweise ist im Hinblick auf den geforderten hohen Durchsatz nicht sehr effizient. Die Erzielung eines sauberen und nahezu unsichtbaren Übergangs zwischen der Kanten-und der Flächenbeschichtung stellt zudem höchste Anforderungen an die Beschichtungstechnologie.

Wünschenswert wären (strahlenhärtende) Beschichtungssysteme, die eine flächige Beschichtung des Furnierholzes im Bereich der späteren Flächen und Kanten des Formteiles erlauben und deren Applikation vor dem Direktpostformingverfahren erfolgt. Mit derartigen Systemen könnten die erforderlichen Arbeitsschritte deutlich reduziert und der Gesamtprozess dementsprechend wirtschaftlicher gestaltet werden. Die bisher bekannten strahlenhärtenden Beschichtungssysteme sind jedoch aufgrund ihrer Materialeigenschaften für die anspruchsvollen Verarbeitungsbedingungen des Direktpostformingverfahrens nicht geeignet. Das gilt sowohl für konventionelle Beschichtungssyteme wie ungesättigte Polyesterharze, Epoxyacrylate, ungesättigte Harze aus N-heterocyclischen Verbindungen, Polyesteracrylate, Urethanacrylate, Siliconacrylate, monomerhaltige gesättigte Harze, ungesättigte Acrylharze, ungesättigte Amine, Thiol-En-Systeme und deren Kombination mit Monomeren als auch für wasserbasierende strahlenhärtende Beschichtungssysteme.

Strahlenhärtende Beschichtungssysteme für Furnierholz, die bereits vor dem Direktpostformingverfahren appliziert werden können, waren bisher nicht bekannt.

Der vorliegenden Erfindung lag daher die Aufgabe zugrunde, ein flexibles postformingfähiges Beschichtungssystem zu entwickeln, welches die genannten Nachteile des Standes der Technik nicht aufweist, sondern gute anwendungstechnische Eigenschaften besitzt und gleichzeitig unter Berücksichtigung ökologischer, ökonomischer und physiologischer Aspekte hergestellt werden kann.

Diese Aufgabe wurde erfindungsgemäß durch die Bereitstellung eines flexiblen und/oder postformingfähigen Beschichtungssystems auf Basis von Polyurethan-Dispersionen gelöst, welches dadurch erhältlich ist, dass man

a) 25 bis 250 Gew.-Teile einer Polyol-Komponente (A) umfassend

$a_1$) 10 bis 100 Gew.-Teile eines ungesättigten polymeren Polyols (A)(i) mit einer oder mehreren radikalisch polymerisierbaren Doppelbindungen und zwei oder mehreren Hydroxyl-Gruppen und einer Molekularmasse von 200 bis 6 000 Dalton
und/oder
10 bis 100 Gew.-Teile eines polymeren Polyols (A) (ii) mit zwei oder mehreren Hydroxyl-Gruppen und einer Molekularmasse von 500 bis 6 000 Dalton,
$a_2$) 2,5 bis 25 Gew.-Teile einer niedermolekularen Polyol-Komponente (A)(iii) mit zwei oder mehreren Hydroxyl-Gruppen und einer Molekularmasse von 50 bis 249 Dalton,
$a_3$) 2,5 bis 25 Gew.-Teile einer niedermolekularen und anionogenen Polyol-Komponente (A)(iv) mit zwei oder mehreren Hydroxyl-Gruppen und einer oder mehreren inerten Carbonsäure- und/oder Sulfonsäure-Gruppe (n) und einer Molekularmasse von 100 bis 1000 Dalton,

b) 50 bis 250 Gew.-Teile einer Polyisocyanat-Komponente (B), umfassend mindestens ein Polyisocyanat, Polyisocyanat-Derivat und/oder Polyisocyanat-Homologes mit zwei oder mehreren aliphatischen und/oder aromatischen Isocyanat-Gruppen,

c) 2 bis 50 Gew.-Teile einer Polyamin-Komponente (C), umfassend

$c_1$) 1 bis 25 Gew.-Teile eines tertiären Amins als Neutralisations-Komponente (C)(i)
und
$c_2$) 1 bis 25 Gew.-Teile eines Polyamins mit zwei oder mehreren primären und/oder sekundären Amino-Gruppen als Kettenverlängerungs-Komponente (C)(ii),

d) 0 bis 100 Gew.-Teile einer Lösemittel-Komponente (D), umfassend ein inertes organisches Lösemittel und/oder einen copolymerisierbaren Reaktivverdünner mit einer oder mehreren radikalisch polymerisierbaren Doppelbindungen, und

5

e) 50 bis 1 500, insbesondere 250 bis 1 500 Gew.-Teile Wasser
zu einer lösemittelfreien oder lösemittelarmen Polyurethan-Dispersion umsetzt und diese anschließend durch Zugabe von

f) ggf. 0,5 bis 50 Gew.-Teilen einer Photoinitiator-Komponente (E) und

g) 0,5 bis 500 Gew.-Teilen einer Formulierungs-Komponente (F)

zum Endprodukt (Postforming-Beschichtung) weiterverarbeitet.

Es hat sich nämlich überraschenderweise gezeigt, dass durch die Verwendung des erfindungsgemäßen flexiblen und/oder postformingfähigen Beschichtungssystems auf Basis von (strahlenhärtenden) Polyurethan-Dispersionen nicht nur die Herstellung von industriell beschichteten Furnierholz-Formteilen bedeutend vereinfacht werden kann, sondern dass darüber hinaus auch noch im Postformingverfahren durch die Plastifizierung des Furniers bzw. des Beschichtungsmaterials ein Pflastereffekt erzielt werden kann, der in Abhängigkeit von der Verformbarkeit des Furniers kleinere Biegeradien ermöglicht und eine Bedampfung oder Befeuchtung des Furniers erübrigt. Zudem war nicht vorhersehbar, dass das erfindungsgemäße flexible und/oder postformingfähige Beschichtungssystem sich auch als Klebstoff für die Verleimung des Furniers bzw. der Beschichtungsmaterialien auf dem Blind- und/oder Trägermaterial eignet.

Das erfindungsgemäße flexible und/oder postformingfähige Beschichtungssystem ist definiert durch sein mehrstufiges Herstellverfahren.

Zur Durchführung dieses Verfahrens wird unter Anwendung der in der Polyurethan-Chemie üblichen Techniken in der Reaktionsstufe $a_1$) ein Premix aus 10 bis 100 Gew.-Teilen eines polymeren Polyols (A) (i) mit einer oder mehreren radikalisch polymerisierbaren Doppelbindungen und/oder 10 bis 100 Gew.-Teilen eines polymeren Polyols (A)(ii), 2,5 bis 25 Gew.-Teilen einer niedermolekularen Polyol-Komponente (A)(iii), 2,5 bis 25 Gew.-Teilen einer niedermolekularen und anionogenen Polyol-Komponente (A) (iv) und 0 bis 100 Gew.-Teilen einer Lösemittel-Komponente (D) hergestellt und in der Reaktionsstufe $a_2$) mit 50 bis 250 Gew.-Teilen einer Polyisocyanat-Komponente (B) ggf. stufenweise und ggf. in Gegenwart eines Katalysators zu einem Polyurethan-Prepolymer umgesetzt werden. Die Herstellung des Polyurethan-Prepolymers gemäss Reaktionsstufe $a_2$) erfolgt vorzugsweise in der Weise, dass die Komponente (B) innerhalb eines Zeitraumes von einigen Minuten bis zu einigen Stunden dem Gemisch aus den Komponenten (A)(i) und/oder (A)(ii), (A)(iii), (A)(iv) und (D) zugesetzt bzw. zudosiert wird und/oder alternativ dazu das Gemisch aus Komponenten (A)(i) und/oder (A)(ii), (A)(iii), (A)(iv), (D) ggf. stufenweise innerhalb eines Zeitraumes von einigen Minuten bis zu einigen Stunden der Komponente (B) zugesetzt bzw. zudosiert wird.

Alternativ dazu können in der Reaktionsstufe $a_1$) auch 10 bis 100 Gew.-Teile eines polymeren Polyols (A)(i) mit einer oder mehreren radikalisch polymerisierbaren Doppelbindungen und/oder 10 bis 100 Gew.-Teile eines polymeren Polyols (A)(ii), 2,5 bis 25 Gew.-Teile einer niedermolekularen Polyol-Komponente (A)(iii) und 0 bis 100 Gew. -Teile einer Lösemittel-Komponente (D) mit 50 bis 250 Gew.-Teilen einer Polyisocyanat-Komponente (B) ggf. in Gegenwart eines Katalysators zu einem Polyurethan-Preaddukt umgesetzt werden. Die Herstellung des Polyurethan-Preaddukts gemäss Reaktionsstufe $a_1$) erfolgt vorzugsweise in der Weise, dass die Komponente (B) innerhalb eines Zeitraumes von einigen Minuten bis zu einigen Stunden dem Gemisch aus den (A)(i) und/oder (A)(ii), (A)(iii) und (D) zugesetzt bzw. zudosiert wird oder alternativ dazu das Gemisch aus den Komponenten (A)(i) und/oder (A)(ii), (A)(iii), und (D) innerhalb eines Zeitraumes von einigen Minuten bis zu einigen Stunden der Komponente (B) zugesetzt bzw. zudosiert wird. In der nachfolgenden Reaktionsstufe $a_2$) wird das ganz oder teilweise abreagierte Polyurethan-Preaddukt aus Stufe $a_1$) mit 2,5 bis 25 Gew.-Teilen einer niedermolekularen und anionogenen Polyol-Komponente (A)(iv) zum entsprechenden Polyurethan-Prepolymer umgesetzt. Die Herstellung des Polyurethan-Prepolymers gemäss Reaktionsstufe $a_2$) erfolgt vorzugsweise in der Weise, dass die feingemahlene Polyol-Komponente (A)(iv) mit einer mittleren Teilchengröße < 150 µm innerhalb eines Zeitraums von einigen Minuten bis zu einigen Stunden dem Polyurethan-Preaddukt aus Stufe $a_1$) zugesetzt bzw. zudosiert wird. Das in Reaktionstufe $a_2$) eingesetzte Polyurethan-Preaddukt aus Reaktionsstufe $a_1$) kann bei entsprechender Prozessführung bzw. unvollständiger Umsetzung neben Isocyanat-Gruppen und/oder Polyisocyanat-Monomeren ggf. auch noch freie Hydroxyl-Gruppen aufweisen.

Die Durchführung der Reaktionsstufen $a_1$) und $a_2$) ist im Hinblick auf die Reaktionsbedingungen relativ unkritisch. Der Reaktionsansatz wird in den Reaktionsstufen $a_1$) und $a_2$) unter Ausnutzung der Exothermie der Polyadditions-Reaktion bis zum Erreichen des berechneten bzw. theoretischen NCO-Gehaltes bei 60 bis 120 °C, vorzugsweise bei 80 bis 100 °C, unter Inertgas-Atmosphäre gerührt. Die erforderlichen ReaktionsZeiten liegen üblicherweise im Bereich von einigen Stunden und werden durch Reaktions-Parameter wie die Reaktivität der Komponenten, die Stöchiometrie der Komponenten und die Temperatur maßgebend beeinflusst.

Die Umsetzung der Komponenten (A), (B) und (D) in den Reaktionsstufe $a_1$) und/oder $a_2$) kann in Gegenwart eines für Polyadditions-Reaktionen an Polyisocyanaten üblichen Katalysators erfolgen. Bei Bedarf erfolgt ein Zusatz dieser Katalysatoren in Mengen von 0,01 bis 1 Gew.-% bezogen auf die Komponenten (A) und (B). Gebräuchliche Katalysatoren für Polyadditions-Reaktionen an Polyisocyanate sind beispielsweise Dibutylzinnoxid, Dibutylzinndilaurat (DBTL), Triethylamin, Zinn(II)-octoat, 1,4-Diaza-bicyclo[2,2,2]octan (DABCO), 1,4-Diaza-bicyclo[3,2,0]-5-nonen (DBN), 1,5-Diaza-bicyclo[5,4,0]-7-undecen (DBU).

Die Komponente (A)(i) besteht aus mindestens einem ungesättigten polymeren Polyol mit einer oder mehreren radikalisch polymerisierbaren Doppelbindungen und zwei oder mehreren gegenüber Polyisocyanaten reaktiven Hydroxyl-Gruppen und einer mittleren Molekularmasse (Zahlenmittel) von 200 bis 6 000 Dalton, vorzugsweise 250 bis 6000 Dalton. Als geeignete polymere Polyole (A)(i) können ungesättigte Polyester-Polyole und andere Verbindungen eingesetzt werden. Geeignete ungesättigte Polyester-Polyole sind beispielsweise Kondensationsprodukte auf Basis von aliphatischen und/oder aromatischen Alkoholen, insbesondere Polyolen wie Ethylenglykol und/oder 1,2(1,3)-Propylenglykol und/oder 1,4-Butylenglykol und/oder Diethylenglykol und/oder Dipropylenglykol und/ Neopentylglykol und/ oder Glycerol und/oder Trimethylolpropan, Epoxiden, gesättigten aliphatischen oder aromatischen Carbonsäuren und deren Derivaten (Anhydride, Ester) wie Glutarsäure und/oder Adipinsäure und/oder Phthalsäure und/oder Isophthalsäure und/oder Terephthalsäure, ungesättigten aliphatischen oder aromatischen Carbonsäuren wie Maleinsäure(anhydrid), Fumarsäure, Itaconsäure, Acrylsäure, Methacrylsäure. Bevorzugt werden lineare bzw. difunktionelle aliphatische und/oder aromatische Polyester-Polyole mit einem Gehalt an radikalisch polymerisierbaren Doppelbindungen von 100 bis 1000 meq·$(100\ g)^{-1}$ und mit einer mittleren Molekularmasse (Zahlenmittel) von 200 bis 3000 Dalton eingesetzt.

Ebenfalls geeignete Verbindungen sind beispielsweise Umsetzungsprodukte aus Epoxiden und (Meth)acrylsäure wie Bisphenol A-glycerolat Diacrylat, sowie Umsetzungsprodukte aus Hydroxyalkyl(meth)acrylaten, Polyisocyanaten und Verbindungen mit drei gegenüber Polyisocyanaten reaktiven Gruppen. Bevorzugt werden Verbindungen mit einem Gehalt an radikalisch polymerisierbaren Doppelbindungen von 100 bis 1000 meq· $(100\ g)^{-1}$ und mit einer mittleren Molekularmasse (Zahlenmittel) von 500 bis 3000 Dalton eingesetzt. Prinzipiell können auch mit radikalisch polmerisierbaren Gruppen modifizierte Polyalkylenglykole, Polycaprolactone, Polycarbonate, $\alpha,\omega$-Polymethacrylatdiole, $\alpha,\omega$-Dihydroxyalkylpolydimethylsiloxane, Makromonomere, Telechele oder Gemische daraus eingesetzt werden.

Die Komponente (A)(ii) besteht aus mindestens einem polymeren Polyol mit zwei oder mehreren gegenüber Polyisocyanaten reaktiven Hydroxyl-Gruppen und einer mittleren Molekularmasse (Zahlenmittel) von 500 bis 6000 Dalton. Als geeignete polymere Polyole (A)(ii) können polymere Polyole wie Polyalkylenglykole, aliphatische und/oder aromatische Polyester, Polycaprolactone, Polycarbonate, Alkydharze, Umsetzungsprodukte aus polyfunktionellen Epoxidharzen und ungesättigten Fettsäuren, $\alpha,\omega$-Polymethacrylatdiole, $\alpha,\omega$-Dihydroxyalkylpolydimethylsiloxane, Makromonomere, Telechele oder Gemische daraus eingesetzt werden. Geeignete Polyalkylenglykole sind beispielsweise Polypropylenglykole, Polytetramethylenglykole bzw. Polytetrahydrofurane, Umsetzungsprodukte aus monofunktionellen Polyalkylenglykolen, Polyisocyanaten und Verbindungen mit drei gegenüber Polyisocyanaten reaktiven Gruppen sowie hydrophobierte Blockcopolymere, hydrophobe Blockcopolymere und hydrophobierte statistische Copolymere auf Basis von Polyalkylenglykolen. Bevorzugt werden lineare bzw. difunktionelle Polypropylenglykole mit einer mittleren Molekularmasse (Zahlenmittel) von 1000 bis 3000 Dalton eingesetzt.

Geeignete aliphatische und/oder aromatische Polyester sind beispielsweise Kondensationsprodukte auf Basis von aliphatischen und/oder aromatischen Alkoholen, insbesondere Polyolen wie Ethylenglykol und/oder 1,2(1,3)-Propylenglykol und/oder 1,4-Butylenglykol und/oder Diethylenglykol und/oder Dipropylenglykol und/oder 1,6-Hexamethylenglykol und/oder Neopentylglykol und/oder Glycerol und/oder Trimethylolpropan sowie aliphatischen und/oder aromatischen Carbonsäuren und deren Derivaten (Anhydride, Ester) wie Glutarsäure und/oder Adipinsäure und/oder Phthalsäure und/oder Isophthalsäure und/oder Terephthalsäure und/oder 5-Sulfoisophthalsäure(dimethylester)-Natrium. Bevorzugt werden lineare bzw. difunktionelle aliphatische und/oder aromatische Polyester-Polyole mit einer mittleren Molekularmasse (Zahlenmittel) von 1000 bis 3000 Dalton eingesetzt.

Polycaprolactone auf Basis von $\varepsilon$-Caprolacton, Polycarbonate auf Basis von Dialkylcarbonaten und Glykolen und Kombinationen daraus gehören ebenfalls zur Gruppe der Polyester. Bevorzugt werden lineare bzw. difunktionelle Typen mit einer mittleren Molekularmasse (Zahlenmittel) von 1000 bis 3000 Dalton eingesetzt.

Als $\alpha,\omega$-Polymethacrylatdiole (z.B. TEGO® Diol BD 1000, TEGO® Diol MD 1000 N, TEGO® Diol MD 1000 X, Fa. Tego Chemie Service GmbH) und $\alpha,\omega$-Dihydroxyalkylpolydimethylsiloxane werden bevorzugt lineare bzw. difunktionelle Typen mit einer mittleren Molekularmasse (Zahlenmittel) von 500 bis 3000 Dalton eingesetzt.

Die Komponente (A)(iii) besteht aus mindestens einem niedermolekularen Polyol mit zwei oder mehreren gegenüber Polyisocyanaten reaktiven Hydroxyl-Gruppen und einer mittleren Molekularmasse von 50 bis 249 Dalton. Als geeignete niedermolekulare Polyole können beispielsweise Ethylenglykol, 1,2(1,3)-Propylenglykol, 1,4-Butylenglykol, 1,6-Hexamethylenglykol, 2-Methyl-1,3-propandiol, Neopentylglykol, Cyclohexandimethanol, Glycerol, Trimethylolethan, Trimethylolpropan, Pentaerythrit oder Gemische davon eingesetzt werden.

Die Komponente (A)(iv) besteht aus mindestens einem niedermolekularen und anionogenen Polyol mit einer Molekularmasse von 100 bis 1000 Dalton sowie zwei oder mehreren gegenüber Polyisocyanaten reaktiven Hydroxyl-Gruppen und einer oder mehreren gegenüber Polyisocyanaten inerten Carbonsäure- und/oder Sulfonsäure-Gruppen, die in Gegenwart von Basen ganz oder teilweise in Carboxylat- und/oder Sulfonat-Gruppen überführt werden können. Die Komponente (A)(iv) kann auch bereits in Form ihrer Salze mit Basen eingesetzt werden. Als niedermolekulare und anionisch modifizierbare Polyole können beispielsweise 2-Hydroxymethyl-3-hydroxypropansäure bzw. Dimethylolessigsäure, 2-Hydroxymethyl-2-methyl-3-hydroxypropansäure bzw. Dimethylolpropionsäure, 2-Hydroxymethyl-2-ethyl-3-hydroxypropansäurebzw. Dimethylolbuttersäure, 2-Hydroxymethyl-2-propyl-3-hydroxypropansäure bzw. Dimethylolvaleriansäure, Citronerisäure, Weinsäure, [Tris-(hydroxymethyl)-methyl]-3-aminopropansulfonsäure (TAPS, Fa. Raschig GmbH), Building Blocks auf Basis von 1,3-Propansulton (Fa. Raschig GmbH) und/oder 3-Mercaptopropansulfonsäure, Natrium-Satz (MPS, Fa. Raschig GmbH) eingesetzt werden. Diese Building Blocks können ggf. auch Amino-Gruppen anstelle von Hydroxyl-Gruppen aufweisen. Bevorzugt werden Bishydroxyalkancarbonsäuren mit einer Molekularmasse von 100 bis 200 Dalton eingesetzt und insbesondere 2-Hydroxymethyl-2-methyl-3-hydroxypropansäure bzw. Dimethylolpropionsäure (Handelsname DMPA® der Fa. Trimet Technical Products, Inc.).

Die Polyisocyanat-Komponente (B) besteht aus mindestens einem Polyisocyanat, Polyisocyanat-Derivat oder Polyisocyanat-Homologen mit zwei oder mehreren aliphatischen und/oder aromatischen Isocyanat-Gruppen. Geeignet sind insbesondere die in der Polyurethan-Chemie hinreichend bekannten Polyisocyanate oder Kombinationen daraus. Als geeignete aliphatische Polyisocyanate können bspw. 1,6-Diisocyanatohexan (HDI), 1-Isocyanato-5-isocyanatomethyl-3,3,5-trimethyl-cyclohexan bzw. Isophorondiisocyanat (IPDI), Bis-(4-isocyanatocyclo-hexyl)-methan ($H_{12}$MDI), 1,3-Bis-(1-isocyanato-1-methyl-ethyl)-benzol (m-TMXDI) bzw. technische Isomeren-Gemische der einzelnen aliphatischen Polyisocyanate eingesetzt werden. Als geeignete aromatische Polyisocyanate können beispielsweise 2,4-Diisocyanatoluol bzw. Toluoldiisocyanat (TDI), Bis-(4-isocyanatophenyl)-methan (MDI) und ggf. dessen höhere Homologe (Polymeric MDI) bzw. technische Isomeren-Gemische der einzelnen aromatischen Polyisocyanate eingesetzt werden. Weiterhin sind auch die sogenannten "Lackpolyisocyanate" auf Basis von Bis-(4-isocyanatocyclohexyl)-methan ($H_{12}$MDI), 1,6-Diisocyanatohexan (HDI), 1-Isocyanato-5-isocyanatomethyl-3,3,5-trimethyl-cyclohexan(IPDI) grundsätzlichgeeignet. Der Begriff "Lackpolyisocyanate" kennzeichnet Allophanat-, Biuret-, Carbodiimid-, Isocyanurat-, Uretdion-, Urethan-Gruppen aufweisende Derivate dieser Diisocyanate, bei denen der Rest-Gehalt an monomeren Diisocyanaten dem Stand der Technik entsprechend auf ein Minimum reduziert wurde. Daneben können auch noch modifizierte Polyisocyanate eingesetzt werden, die beispielsweise durch hydrophile Modifizierung von "Lackpolyisocyanaten" auf Basis von 1,6-Diisocyanatohexan (HDI) zugänglich sind. Die aliphatischen Polyisocyanate sind gegenüber den aromatischen Polyisocyanaten zu bevorzugen. Weiterhin werden Polyisocyanate mit Isocyanat-Gruppen unterschiedlicher Reaktivität bevorzugt. Vorzugsweise werden Polyisocyanate mit Isocyanat-Gruppen unterschiedlicher Reaktivität eingesetzt, um engere Molekular-Massen-Verteilungen mit geringerer Uneinheitlichkeit zu erhalten. Dementsprechend werden Polyurethan-Prepolymere mit linearer Struktur bevorzugt, die sich aus difunktionellen Polyol- und Polyisocyanat-Komponenten zusammensetzen.

Das NCO/OH-Equivalentverhältnis der Komponenten (A) und (B) wird vorzugsweise auf einen Wert von 1,25 bis 2,5, besonders bevorzugt 1,4 bis 2,0 eingestellt.

Die Lösemittel-Komponente (D) besteht aus mindestens einem inerten organischen Lösemittel und/oder mindestens einem Reaktivverdünner mit einer oder mehreren radikalisch polymerisierbaren Doppelbindungen. Als geeignete organische Lösemittel können beispielsweise niedrigsiedende Lösemittel wie Aceton und Methylethylketon und/oder hochsiedende Lösemittel wie N-Methylpyrrolidon und Dipropylenglykoldimethylether (Proglyde DMM®) eingesetzt werden. Nach der Herstellung können die niedrigsiedenden organischen Lösemittel ggf. durch Redestillation wieder entfernt werden. Gemäss einer besonders bevorzugten Ausführungsform enthält die Polyurethan-Dispersion weniger als 10 Gew.-% an organischen Lösemitteln.

Als geeignete Reaktivverdünner können beispielsweise monofunktionelle Monomeren wie (Meth)acrylsäurebutylester, (Meth)acrylsäureisobutylester, (Meth)acrylsäure-tert.-butylester, (Meth)acrylsäurehexylester, (Meth)acrylsäurecyclohexylester, (Meth)acrylsäureoctylester, (Meth)acrylsäure-(2-ethylhexylester), (Meth)acrylsäure-(3,3,5-trimethylhexylester), (Meth)acrylsäuredecylester, (Meth)acrylsäuredodecylester, (Meth)acrylsäureisododecylester, (Meth)acrylsäureoctadecylester, (Meth)acrylsäure-(2-hydroxyethylester), (Meth)acrylsäure-(hydroxypropylester) (Isomeren-Gemisch), (Meth)acrylsäurebenzylester, (Meth)acrylsäurephenoxyethylester (Meth)acrylsäureisobornylester, (Meth)acrylsäuretetrahydrofurfurylester, (Meth)acrylsäuredicyclopentylester, (Meth)acrylsäureester mit einer radikalisch polymerisierbaren Doppelbindung auf Basis von Methoxypolyethylenglykol, bifunktionelle Monomeren wie 1,6-Hexandioldiacrylat, Dipropylenglykoldiacrylat, Tripropylenglykoldiacrylat, Triethylenglykoldiacrylat, Tetraethylenglykoldiacrylat, Polyethylenglykol (200 und 400) diacrylat, ethoxyliertes und propoxyliertes Neopentylglykoldiacrylat, polyfunktionelle Monomere wie Trimethylolpropantriacrylat, ethoxyliertes und propoxyliertes Trimethylolpropantriacrylat, Ditrimethylolpropantetraacrylat, propoxyliertes Glycerintriuacrylat, Tris-(2-hydroxyethyl)-isocyanurattriacrylat, alkoxylierte Tetraacrylate und hoch alkoxylierte Tetraacrylate sowie weitere (Meth)acrylsäureester mit zwei oder mehreren radikalisch polymerisierbaren Doppelbindungen auf Basis von niedermolekularen und/oder hochmolekularen polymeren Polyolen oder Gemische davon eingesetzt werden.

Die Viskosität der Polyurethan-Prepolymere ist relativ niedrig und weitgehend unabhängig von der Struktur der verwendeten Polyol- und Polyisocyanat-Komponenten. Ein Zusatz von Lösemitteln zur Viskositätsverminderung oder zur Verbesserung der DispergierEigenschaften der Polyurethan-Prepolymere ist daher - wenn überhaupt - meist nur in geringem Umfang erforderlich.

Die Aufarbeitung des Polyurethan-Prepolymers mit 2 bis 50 Gew.-Teilen, vorzugsweise 5 bis 50 Gew.-Teilen, der Polyamin-Komponente (C) erfolgt in den Reaktionsstufen $a_3$) und $a_4$).

Das Polyurethan-Prepolymer aus Reaktionsstufe $a_2$) wird in der Reaktionsstufe $a_3$) vor und/oder während der Dispergierung in 50 bis 1500 Gew.-Teilen Wasser, vorzugsweise 250 bis 1 500 Gew.-Teilen Wasser, mit 1 bis 25 Gew.-Teilen, vorzugsweise 2,5 bis 25 Gew.-Teilen, einer Neutralisations-Komponente (C)(i) zur vollständigen oder teilweisen Neutralisation der Carbonsäure-und/oder Sulfonsäure-Gruppen umgesetzt (direkte oder indirekte Neutralisation). Im Falle einer direkten Neutralisation wird die Neutralisations-Komponente (C)(i) bereits vor der Dispergierung in Wasser in das Polyurethan-Prepolymer eingebracht, im Falle einer indirekten Neutralisation wird die Neutralisations-Komponente (C)(i) vor der Dispergierung im Wasser vorgelegt. Bei Bedarf kann auch eine Kombination aus direkter und indirekter Neutralisation angewendet werden.

Bei der Dispergierung wird das Polyurethan-Prepolymer in das Dispergier-Medium überführt und bildet dabei eine Polyurethan-Prepolymer-Dispersion aus. Das neutralisierte Polyurethan-Prepolymer bildet dabei Micellen, die an der Oberfläche stabilisierende Carboxylat- und/oder Sulfonat-Gruppen und im Inneren reaktive Isocyanat-Gruppen aufweisen. Alle kationischen GegenIonen zu den anionischen Carboxylat- und/oder Sulfonat-Gruppen sind im Dispergier-Medium gelöst. Die Begriffe "Dispergierung" bzw. "Dispersion" beinhalten, dass neben dispergierten Komponenten mit micellarer Struktur auch solvatisierte und/oder suspendierte Komponenten enthalten sein können. Für die Überführung des Polyurethan-Prepolymers in die wässrige Phase kann entweder das Polyurethan-Prepolymer in das Dispergier-Medium oder das Dispergier-Medium in das Polyurethan-Prepolymer (Invers-Verfahren) eingerührt werden.

Der Härtegrad des verwendeten Wassers ist für das Verfahren unerheblich, die Verwendung von destilliertem oder entsalztem Wasser ist daher nicht erforderlich. Hohe Härtegrade bewirken eine weitere Verringerung der Wasseraufnahme der Polyurethan-Dispersionen, ohne deren MaterialEigenschaften negativ zu beeinflussen.

Die Reaktions-Stufe $a_3$) wird vorzugsweise bei einer Temperatur von 40 bis 60 °C, insbesondere bei ca. 50 °C, durchgeführt.

Die Neutralisations-Komponente (C)(i) besteht aus einer oder mehreren Basen, die zur vollständigen oder teilweisen Neutralisation der Carbonsäure-und/oder Sulfonsäure-Gruppen dienen. Sofern die Komponente (B)(i) bereits in Form ihrer Salze vorliegt, kann auf die Neutralisations-Komponente (D) verzichtet werden. Als geeignete Basen können beispielsweise tertiäre Amine wie N,N-Dimethylethanolamin, N-Methyldiethanolamin, Triethanolamin, N,N-Dimethylisopropanolamin, N-Methyldiisopropanoiamin, Triisopropylamin, N-Methylmorpholin, N-Ethylmorpholin, Triethylamin, Ammoniak oder Alkalihydroxide wie Lithiumhydroxid, Natriumhydroxid, Kaliumhydroxid oder Gemische davon eingesetzt werden. Bevorzugt werden tertiäre Amine und insbesondere Triethylamin eingesetzt.

Die Neutralisations-Komponente (C)(i) wird in einer solchen Menge zugegeben, dass der Neutralisations-Grad bezogen auf die freien Carbonsäure-und/oder Sulfonsäure-Gruppen des Polyurethan-Prepolymers vorzugsweise bei 50 bis 100 Equivalent-%, besonders bevorzugt bei 80 bis 90 Equivalent-%, liegt. Bei der Neutralisation werden aus den Carbonsäure-und/oder Sulfonsäure-Gruppen Carboxylat- und/oder Sulfonat-Gruppen gebildet, die zur anionischen Modifizierung bzw. Stabilisierung der Polyurethan-Dispersion dienen.

Das neutralisierte und dispergierte Polyurethan-Prepolymer (Polyurethan-Prepolymer-Dispersion) aus Reaktonsstufe $a_3$) wird in der anschließenden Reaktionsstufe $a_4$) mit 1 bis 25 Gew.-Teilen, vorzugsweise 2,5, bis 25 Gew.-Teilen, einer Kettenverlängerungs-Komponente (C)(ii) umgesetzt.

Die Kettenverlängerungs-Komponente (C)(ii) besteht aus mindestens einem Polyamin mit zwei oder mehreren gegenüber Polyisocyanaten reaktiven primären und/oder sekundären Amino-Gruppen. Als geeignete Polyamine können beispielsweise Adipinsäuredihydrazid, Ethylendiamin, Diethylentriamin, Triethylentetramin, Tetraethylenpentamin, Pentaethylenhexamin, Dipropylentriamin, Hexamethylendiamin, Hydrazin, Isophorondiamin, N-(2-Aminoethyl)-2-aminoethanol, Addukte aus Salzen der 2-Acrylamido-2-methylpropan-1-sulfonsäure (AMPS®) und Ethylendiamin, Addukte aus Salzen der (Meth)acrylsäure und Ethylendiamin, Addukte aus 1,3-Propansulfon und Ethylendiamin oder beliebige Kombination dieser Polyamine. Bevorzugt werden difunktionelle primäre Amine und insbesondere Ethylendiamin eingesetzt.

Die Kettenverlängerungs-Komponente (C)(ii) wird in einer solchen Menge zugegeben, dass der Kettenverlängerungs-Grad bezogen auf die freien Isocyanat-Gruppen des Polyurethan-Prepolymers bei 50 bis 100 Equivalent-%, vorzugsweise bei 70 bis 80 Equivalent-%, liegt. Die Kettenverlängerungs-Komponente (C)(ii) kann in vorab entnommenen Anteilen des Wassers im Gewichtsverhältnis 1:1 bis 1:10 verdünnt werden, um die zusätzliche Exothermie durch die Hydratisierung der Amine zurückzudrängen.

Die Kettenverlängerung der Polyurethan-Prepolymer-Dispersion führt zum Aufbau der Molekularmasse innerhalb der Micellen und zur Bildung einer Polyurethan-Polyharnstoff-Dispersion hoher Molekularmasse. Die Kettenverlängerungs-Komponente (C)(ii) reagiert dabei mit reaktiven Isocyanat-Gruppen wesentlich rascher als Wasser. Im Anschluss an die Reaktions-Stufe $a_4$) werden evtl. noch vorhandene freie Isocyanat-Gruppen mit Wasser vollständig kettenverlängert.

Der Gehalt an radikalisch polymerisierbaren Doppelbindungen im Polyurethan-Polymer aus den Komponenten (A) bis (C) bzw. (A) bis (D) bei Anwesenheit eines Reaktivverdünners wird vorzugsweise auf 0 bis 100 meq·(100

g)$^{-1}$, besonders bevorzugt auf 30 bis 50 meq·(100 g)$^{-1}$ eingestellt.

Der Gehalt an Carboxylat- und/oder Sulfonat-Gruppen im Polyurethan-Polymer aus den Komponenten (A) bis (C) bzw. (A) bis (D) bei Anwesenheit eines Reaktivverdünners wird vorzugsweise auf 10 bis 50 meq·(100 g)$^{-1}$, besonders bevorzugt auf 15 bis 45 meq·(100 g)$^{-1}$, und die Säurezahl vorzugsweise auf 5 bis 25 meq KOH·g$^{-1}$, besonders bevorzugt auf 7,5 bis 22,5 meq KOH·g$^{-1}$, eingestellt.

Die mittleren Partikelgrössen der Polyurethan-Dispersion aus den Komponenten (A) bis (D) betragen vorzugsweise 50 bis 500 nm, besonders bevorzugt 100 bis 400 nm.

Die mittleren Molekularmassen (Zahlenmittel) der Polyurethan-Dispersion aus den Komponenten (A) bis (D) betragen vorzugsweise 50 000 bis 50 0000 Dalton.

Die lösemittelarme oder lösemittelfreie Polyurethan-Dispersion aus Reaktionsstufe a$_4$) wird in der Stufe a$_5$) mit ggf. 0,5 bis 50 Gew.-Teilen einer Photoinitiator-Komponente (E) und 0,5 bis 500 Gew.-Teilen einer Formulierungs-Komponente (F) in beliebiger Reihenfolge formuliert. Die Bestandteile der Komponenten (E) und (F) werden dazu gleichzeitig oder sequentiell in die Polyurethan-Dispersion eingebracht. Alternativ dazu können bereits in den Reaktionsstufen a$_3$) und/oder a$_4$) die Bestandteile der Komponenten (E) und/oder (F) ganz oder teilweise zugegeben werden. Die zur UV-induzierten radikalischen Polymerisation benötigte Photoinitiator-Komponente (F) ist nur dann erforderlich, wenn in der Polyurethan-Dispersion aus den Komponenten (A) bis (D) die Komponente (A)(i) enthalten ist und/oder die Komponente (D) einen Reaktivverdünner enthält.

Als geeignete Photoinitiatoren können Verbindungen eingesetzt werden, bei denen die Radikalbildung durch eine homolytische Spaltung (intramolekulare Spaltung) oder durch eine intermolekulare Wasserstoffabstraktion hervorgerufen wird. Geeignete Photoinitiatoren sind beispielsweise α-Spalter wie Benzoinether, Benzilketale, α,α-Dialkoxyacetophenone, α-Hydroxyalkylphenone bzw. α-Hydroxyalkylarylketone, α-Aminoalkylphenone, Acylphosphinoxide, Phosphinoxidketale und Wasserstoffabstraktoren (H-Abstraktoren) wie Benzil, Benzophenon und substituierte Benzophenone, Thioxanthone oder Gemische daraus.

Bevorzugt werden α-Spalter wie Benzoinisopropylether, Benzoinbutylether, Benzildimethylketal, α,α-Diethoxyacetophenon, α-Hydroxy-α-methylpropiophenon (HMEPK), α-Hydroxy-4-(2-hydroxyethoxy)-α-methylpropiophenon (HMEPK-EO), 2-Hydroxy-2-methyl-1-phenylpropan-1-on, (1-Hydroxycyclohexyl)-phenylketon(HCPK),Poly[2-hydroxy-2-methyl-1-[4-(1-methylvinyl)phenyl]propan-1-on], 2-Methyl-1-[4(methylthio)phenyl]-2-morpholin-propan-2-on (MMMP), 2-Benzyl-2-dimethylamino-1-(4-morpholinphenyl)-butan-1-on (BDMP), Diphenyl-(2,4,6-trimethylbenzoyl)-phosphinoxid (MAPO), Phenylpropoxy-(2,4,6-trimethylbenzoyl)-phosphinoxid (MAPO-L), Phenyl-bis-(2,4,6-trimethylbenzoyl)-phosphinoxid (BAPO), Bis(2,6-dimethoxybenzoyl)-2,4,4-trimethylpentylphosphinoxid in Kombination mit α-Hydroxyacetophenon und Wasserstoffabstraktoren (H-Abstraktoren) wie Benzil, Benzophenon (BP), 3-Benzophenonylacrylat (BPA), 2,4,6-Trimethylbenzophenon, 4-Methylbenzophenon, 3,3-Dimethyl-4-methoxybenzophenon, 4-Phenylbenzophenon, 4,4'-Bis(dimethylamino)-benzophenon (Michlersketon), Mischungen aus 2- und 4-Chlorthioxanthonen, Mischungen aus 2- und 4-Isopropylthioxanthonen, 2,4-Dimethylthioxanthon oder Gemische davon eingesetzt.

Photoinitiatoren bilden die Grundvoraussetzung für die Aushärtung von UVstrahlenhärtenden Lacken. Da die Energiedichte der UV-Strahlen nicht ausreicht, die für die Polymerisation notwendige Aktivierungsenergie einzubringen, muss der Umweg über den Einsatz von Photoinitiatoren bzw. Photosensibilisatoren gehen. Die Auswahl der Photoinitiatoren ist sehr kritisch. Sie sind mitverantwortlich für die Reaktivität des Systems sowie für wesentliche Eigenschaften des ausgehärteten Filmes. Die Einflüsse und Wechselwirkungen, die von Photoinitiatoren bzw. Photosensibilisatoren ausgehen sind vielschichtig und wurden oft in der Fachliteratur beschrieben.

Die Photoinitiierung von radikalischen Polymerisationsprozessen lässt sich in drei Stufen unterteilen:

a) Bildung des chemisch angeregten Zustandes des Initiatormoleküls durch direkte Lichtabsorption bzw. durch Energieübertragung von einem photochemisch angeregten Photosensibilisator.
b) Bildung der Startradikale aus dem angeregten Zustand, entweder durch Photodefragmentierung oder durch Wasserstoffabstraktion von einem Wasserstoff-Donator.
c) Kettenstart durch Reaktion des Startradikals mit dem reaktiven Bindemittel-System, bestehend aus Monomeren, Oligomeren, Prepolymeren, Polymeren.

Prinzipiell sollen die Absorptionsbanden des Initiators möglichst gut mit den Hauptemissionsbanden der UV-Lampen übereinstimmen. Entscheidend ist die Größe des Extinktionskoeffizienten des Photoinitiators bei diesen Wellenlängen. Zu hohe Extinktionskoeffizienten bewirken, dass das Licht praktisch schon an der Oberfläche absorbiert wird. Dadurch kommt es zwar zu einer günstigeren Oberflächentrocknung des Lackes, aber auch zu mangelhafter Durchhärtung, was sich z.B. in starker Runzelbildung äußert. Bei pigmentierten Systemen wiederum sollte der Extinktionskoeffizient des Photoinitiators möglichst groß sein, damit er auch in Gegenwart der Pigmente absorbieren kann.

Als geeignete UV-Strahlungsquellen können beispielsweise Quecksilberhochdruckstrahler bzw. Quecksilbermitteldruckstrahler, ozonfreie Strahler, dotierte Quecksilberlampen, mikrowellenangeregte UV-Strahler (H-Lampen, D-Lampen, V-Lämpen), superaktinische Leuchtstofflampen (TL-03- und TL-05-Leuchtstofflampen) sowie UV-Blitzlampen eingesetzt werden, die eine Lampenleistung bis zu 275 W·cm$^{-1}$, vorzugsweise 80 bis 120 W·cm$^{-1}$, aufweisen.

Als geeignete Formulierungs-Komponente (F) können Entschäumer, Entlüfter, Gleit- und Verlaufadditive, strahlenhärtende Additive, Dispergieradditive, Substratnetzadditive, Hydrophobierungsmittel, Rheologieadditive wie Polyurethan-Verdicker, Koaleszenzhilfsmittel, Mattierungsmittel sowie ggf. Füllstoffe, Pigmente und weitere Additive in geeigneter Kombination oder Gemische davon eingesetzt werden.

Der Festkörper-Gehalt des postformingfähigen Beschichtungssystems aus den Komponenten (A) bis (F) wird vorzugsweise auf 10 bis 70 Gew.-%, besonders bevorzugt auf 20 bis 70 Gew.-% und am meisten bevorzugt auf 30 bis 60 Gew.-%, eingestellt.

Der Lösemittel-Gehalt des postformingfähigen Beschichtungssystems aus den Komponenten (A) bis (F) wird vorzugsweise auf 0 bis 10 Gew.-%, besonders bevorzugt auf 0 bis 5 Gew.-% eingestellt.

Es ist im Rahmen der vorliegenden Erfindung ohne Weiteres möglich, die lösemittelfreie oder lösemittelarme Polyurethan-Dispersion aus Stufe a$_5$) mit weiteren wässrigen Polymerdispersionen oder anderen Polymeren in der nachfolgenden Stufe a$_6$) zu kombinieren.

Das erfindungsgemäße Beschichtungssystem eignet sich hervorragend für den Systemaufbau aus Grund- und/oder Deckbeschichtung(en) für Furnierholz und weitere Beschichtungsmaterialien, wobei eine oder mehrere Polyurethan-Dispersion(en) auf Basis der Komponenten (A) bis (D) sowie ggf. weitere Polymere und/oder Reaktivharze bevorzugt als Bindemittel eingesetzt werden.

Als weitere Beschichtungsmaterialien sind gemäß der vorliegenden Erfindung insbesondere Papiere und/oder Kartonagen und/oder Kunststoff-Folien und/oder Metall-Folien anzusehen.

Die als Bindemittel verwendeten Polyurethan-Dispersionen auf Basis der Komponenten (A) bis (D) sind bei physikalischer Trocknung vorzugsweise zur Filmbildung befähigt.

Die Applikation auf Furnierholz und weitere Beschichtungsmaterialien als Grund- und/oder Deckbeschichtung erfolgt in einer oder mehreren Schichten in einer Menge von vorzugsweise insgesamt 1 bis 1000 g·m$^{-2}$ der zu beschichtenden Fläche und pro Arbeitsgang mit einer Trockenschichtdicke von vorzugsweise insgesamt 5 bis 500 μm mit den aus der Lacktechnologie bekannten Methoden, wie z.B. Fluten, Gießen, Rakeln, Spritzen, Streichen, Tauchen, Walzen.

Gemäß einer bevorzugten Ausführungsform erfolgt die Applikation des erfindungsgemäßen Beschichtungssystems in folgenden Schritten:

In Stufe b$_1$) werden die Furniere und weitere Beschichtungsmaterialien auf einem ggf. profilierten Blind- und/oder Trägermaterial mit geeigneten Leimen verklebt.

In Stufe b$_2$) wird das vorgefertigte Werkstück aus Stufe b$_1$) einem Schliff und einer Entstaubung unterzogen sowie ggf. durch Applikation von Entharzungsmitteln und/oder Aufhellungsmitteln und/oder Färbe- und Beizmitteln und/oder Porenfüllern und forcierte Trocknung vorbehandelt. Die Applikation der Vorbehandlungsmittel kann dabei automatisch oder manuell erfolgen und ggf. eine Nachbearbeitung implizieren.

Anschließend wird die Polyurethan-Dispersion aus Stufe a$_4$), a$_5$) oder a$_6$) in der Stufe b$_3$) ggf. in Kombination mit weiteren Polymeren und/oder Reaktivharzen in einer oder mehreren Schichten als Grund- und/oder Deckbeschichtung ggf. pigmentiert auf das ggf. vorbehandelte Werkstück aus Stufe b$_1$) durch Gieß-, Spritz- oder Walzauftrag appliziert, forciert getrocknet, ggf. mittels UV-induzierter radikalischer Polymerisation ausgehärtet und ggf. einem Schliff und einer Entstaubung (Zwischenschliff) unterzogen, wobei diese Verfahrensschritte ggf. wiederholt und in beliebiger Reihenfolge durchgeführt werden können.

Die forcierte Trocknung kann bei Temperaturen von z.B. 30 bis 150 °C durchgeführt werden.

Das auf Furnierholz bzw. weitere Beschichtungsmaterialien applizierte und ausgehärtete Beschichtungssystem aus Stufe b$_3$) wird daraufhin in Stufe b$_4$) einem Postforming-Direktverfahren oder einem Postforming-Normalverfahren unterzogen. Die Verfahrensparameter des Postformingverfahrens bzw. der Postformingmaschine sind abhängig vom Typ des Werkstücks und der Geometrie des herzustellenden Formteiles und können daher nicht verallgemeinert werden.

In Abhängigkeit von der Verformbarkeit der zu bearbeiteten Furniere bzw. Beschichtungsmaterialien sind beim Postformingverfahren Biegeradien von 1 bis 100 mm, vorzugsweise 5 bis 6 mm, herstellbar.

Aus der Verwendung des erfindungsgemäßen flexiblen und/oder postformingfähigen Beschichtungssystems im Rahmen des Postformingverfahrens (PV) ergeben sich folgende anwendungs- und verfahrenstechnischen Vorteile:

- Plastifizierung der bearbeiteten Furniere bzw. Beschichtungsmaterialien
- Pflastereffekt auf dem bearbeiteten Werkstück
- Verwendung während des PV

- glatte und rissfreie Oberfläche auf dem bearbeiteten Werkstück nach dem PV
- auf eine Bedampfung oder Befeuchtung des Furniers bzw. Beschichtungsmaterials kann verzichtet werden

Nach erfolgtem Postformingverfahren kann ggf. noch eine Nachhärtung des flexiblen und/oder postformingfähigen Beschichtungssystems durch Selbstvernetzung im Rahmen einer oxidativen Trocknung oder einer anders gearteten chemischen Vernetzung erfolgen.

Das in Stufe $b_4$) hergestellte Formteil wird in Stufe $b_5$) abgekühlt und abgestapelt. Die geforderte Blockfestigkeit wird dabei sofort erreicht.

Das flexible und/oder postformingfähige Beschichtungssystem kann alternativ zu Stufe $b_3$) auch erst nach dem Direktpostformingverfahren gemäss Stufe $b_4$) einer Strahlenhärtung mittels UV-induzierter radikalischer Polymerisation unterzogen werden.

Außerdem kann alternativ zu Stufe $b_3$) die Applikation der Polyurethan-Dispersion (Postforming-Beschichtung) aus Stufe $a_4$), $a_5$) oder $a_6$) zweikomponentig in Kombination mit geeigneten Härtern erfolgen.

Das flexible und/oder postformingfähige Beschichtungssystem weist nach forcierter Trocknung und ggf. nach Strahlenhärtung mittels UV-induzierter radikalischer Polymerisation eine Zugfestigkeit von vorzugsweise 10 bis 75 MPa, eine Dehnung bei der Zugfestigkeit oder eine Reißdehnung von vorzugsweise 50 bis 500 % und eine Pendelhärte nach König von vorzugsweise 50 bis 150 s bei einer Schichtdicke von 5 bis 500 μm auf.

Das erfindungsgemäße Beschichtungssystem auf Basis von Polyurethan-Dispersionen kann als Grund- und Deckbeschichtung für alle Arten von Furnierhölzern in Form von Möbeln, Fenstern, Leisten, Türen, Zargen, Parkettböden, Furnettböden sowie weiteren Fertigteilprodukten, Postformingelementen und Formteilen beliebiger Geometrie eingesetzt werden.

Es ist hierbei im Rahmen der vorliegenden Erfindung ohne Weiteres möglich, dass als Grundbeschichtung die Polyurethan-Dispersion (Postforming-Beschichtung) aus Stufe $a_4$), $a_5$) oder $a_6$) und als Deckbeschichtung ein ein- oder mehrschichtiger Acryllack eingesetzt wird.

Als geeignete Furniere können Vollhölzer auf Basis von Buche, Eibe, Fichte, Kiefer, Lärche, Tanne, Weymouthskiefer, Zirbelkiefer, Ahorn, Birke, Birnbaum, Eiche, Erle, Esche, Kirschbaum, Linde, Nußbaum, Pappel, Platane, Rüster/Ulme, Brasilkiefer, Abachi, Afrormosia, Afzelia, Ebenholz/Makassarebenholz, Limba, Mahagoni, Makore, Mansonia, Okoume/ Gabun, Padouk, ostindischer Palisander, Rio-Palisander, Ramin, Rosenholz, Sapelli/Sapelli-Mahagoni, Sen, Sipo, Teak, Wenge, Whitewood oder Zingana/Zebrano verwendet werden.

Dem Verarbeiter wird ermöglicht, vorgefertigte Furniere, Furnierholzplatten oder weitere Beschichtungsmaterialien, die mit dem erfindungsgemäßen flexiblen und/oder postformingfähigen Beschichtungssystem oberflächenbehandelt wurden, im Rahmen des Postforming-Direktverfahrens, des Postforming-Normalverfahrens oder weiterer Anwendungen einzusetzen, ohne dafür entsprechende Lackieranlagen vorhalten zu müssen. Das damit verbundene Einsparungspotential ist beträchtlich.

Die vorliegende Erfindung betrifft weiterhin die Verwendung des erfindungsgemäßen, flexiblen und/oder postformingfähigen Beschichtungssystems auf Basis von Polyurethan-Dispersionen aus Stufe $a_4$), $a_5$) oder $a_6$) als Klebstoff für die Verklebung von Furnieren bzw. weiteren beliebigen Beschichtungsmaterialien mit beliebigen Blind- oder Trägermaterialien, wie z.B. Holz, Holzwerkstoffen aller Art, Kunststoffen aller Art, Metallen aller Art, MDF, HDF sowie Verbundwerkstoffen aller Art. Außerdem kann die Polyurethan-Dispersion aus Stufe $a_4$), $a_5$) oder $a_6$) auch für die Kaschierung, Ummantelung, Membranpresstechnick, Softforming an Kantenanleimmaschinen, Verformung sonstiger Materialien, wie z.B. lackierte OSB-Platten, eingesetzt werden.

Die nachfolgenden Beispiele sollen die Erfindung näher veranschaulichen.

**Beispiele A: Polyurethan-Dispersionen**

Beispiel A.1: Bindemittel für Grund- und/oder Deckbeschichtung

In einem Vierhalskolben ausgerüstet mit KPG-Rührer, Rückflußkühler, Thermometer und Stickstoff-Deckung wird die erste Hälfte eines vorgefertigten Polyol-Gemisches aus 36,47 g eines Polyesters mit einer Hydroxyl-Zahl von ca. 80 mg KOH·$g^{-1}$ und einem Gehalt an radikalisch polymerisierbaren Doppelbindungen von 389 meq·$(100\ g)^{-1}$ (Laromer® LR 8800, Fa. BASF AG), 145,90 g eines weiteren Polyesters mit einer Hydroxyl-Zahl von ca. 56,1 mg KOH·$g^{-1}$ (Bester® 42 H, Fa. Poliolchimica S.p.A.), 14,59 g 1,4-Butandiol, 21,88 g Dimethylolpropionsäure (DMPA, Fa. Trimet Technical Products, Inc.), 0,58 g 2,6-Di-tert.-butyl-p-kresol und 72,95 g N-Methylpyrrolidon mit 136,14 g Isophorondiisocyanat (Vestanat IPDI, Fa. Creanova Spezialchemie GmbH) unter Stickstoff-Deckung ca. 1 h bei 80-90 °C gerührt. Nach Zugabe der zweiten Hälfte des vorgefertigten Polyol-Gemisches wird unter Stickstoff-Deckung bei 80-90 °C weiter gerührt, bis der berechnete NCO-Gehalt erreicht ist (Theorie: 3,70 Gew.-%). Der Verlauf der Reaktion wird acidimetrisch verfolgt.

Das Prepolymer wird dann unter intensivem Rühren in ein Gemisch aus 547,05 g Leitungswasser und 16,51 g an Triethylamin dispergiert und anschließend zum Aufbau der Polyurethan-Dispersion mit 11,32 g an Ethylendiamin kettenverlängert.

Es wird eine stabile Polyurethan-Dispersion mit folgender Charakteristik erhalten:

| Charakteristik | semitransluzent |
|---|---|
| Festkörper-Gehalt | 38 Gew.-% |
| Ladungsdichte | 42,94 meq·(100g)$^{-1}$ |

Beispiel A.2: Bindemittel für Grund- und/oder Deckbeschichtung

Die Herstellung erfolgte in Analogie zu Beispiel A.1.

Eingesetzt werden 36,46 g eines Polyesters mit einer Hydroxyl-Zahl von ca. 80 mg KOH·g$^{-1}$ und einem Gehalt an radikalisch polymerisierbaren Doppelbindungen von 389 meq·(100 g)$^{-1}$ (Laromer® PE 44 F, Fa. BASF AG), 145,84 g eines weiteren Polyesters mit einer Hydroxyl-Zahl von ca. 56,1 mg KOH·g$^{-1}$ (Bester® 42 H, Fa. Poliolchimica S.p. A.), 14,58 g 1,4-Butandiol, 21,88 g Dimethylolpropionsäure, 0,73 g 2,6-Di-tert.-butyl-p-kresol, 72,92 g N-Methylpyrrolidon, 136,08 g Isophorondiisocyanat, 547,08 g Leitungswasser, 16,50 g Triethylamin, 7,92 g Ethylendiamin. NCO-Gehalt des Polyurethan-Prepolymers (Theorie): 3,69 Gew.-%

Es wird eine stabile Polyurethan-Dispersion mit folgender Charakteristik erhalten:

| Charakteristik | semitransluzent |
|---|---|
| Festkörper-Gehalt | 38 Gew.-% |
| Ladungsdichte | 42,92 meq•(100 g)$^{-1}$ |

Beispiel A.3: Bindemittel für Grund- und/oder Deckbeschichtung

Die Herstellung erfolgte in Analogie zu Beispiel A.1.

Eingesetzt werden 48,48 g eines Polyesters mit einer Hydroxyl-Zahl von ca. 80 mg KOH·g$^{-1}$ und einem Gehalt an radikalisch polymerisierbaren Doppelbindungen von 389 meq·(100 g)$^{-1}$ (Laromer® LR 8800, Fa. BASF AG), 138,50 g eines weiteren Polyesters mit einer Hydroxyl-Zahl von ca. 56,1 mg KOH·g$^{-1}$ (Bester® 42 H, Fa. Poliolchimica S.p. A.), 13,85 g 1,4-Butandiol, 20,78 g Dimethylolpropionsäure, 0,69 g 2,6-Di-tert.-butyl-p-kresol, 69,25 g N-Methylpyrrolidon, 134,02 g Isophorondiisocyanat, 550,75 g Leitungswasser, 15,67 g Triethylamin, 8,01 g Ethylendiamin. NCO-Gehalt des Polyurethan-Prepolymers (Theorie): 3,70 Gew.-%

Es wird eine stabile Polyurethan-Dispersion mit folgender Charakteristik erhalten:

| Charakteristik | semitransluzent |
|---|---|
| Festkörper-Gehalt | 38 Gew.-% |
| Ladungsdichte | 40,76 meq•(100 g)$^{-1}$ |

Beispiel A.4: Bindemittel für Grund- und/oder Deckbeschichtung

Die Herstellung erfolgte in Analogie zu Beispiel A.1.

Eingesetzt werden 35,23 g eines Polyesters mit einer Hydroxyl-Zahl von ca. 80 mg KOH·g$^{-1}$ und einem Gehalt an radikalisch polymerisierbaren Doppelbindungen von 389 meq·(100 g)$^{-1}$ (Laromer® LR 8800, Fa. BASF AG), 140,91 g eines weiteren Polyesters mit einer Hydroxyl-Zahl von ca. 56,1 mg KOH·g$^{-1}$ (Bester® 42 H, Fa. Poliolchimica S.p. A.), 14,09 g 1,4-Butandiol, 2,82 g Trimethylolpropan, 21,14 g Dimethylolpropionsäure, 0,42 g 2,6-Di-tert.-butyl-p-kresol, 70,45 g N-Methylpyrrolidon, 141,27 g Isophorondiisocyanat, 549,55 g Leitungswasser, 15,95 g Triethylamin, 8,18 g Ethylendiamin. NCO-Gehalt des Polyurethan-Prepolymers (Theorie): 3,83 Gew.-%

Es wird eine stabile Polyurethan-Dispersion mit folgender Charakteristik erhalten:

| Charakteristik | semitransluzent |
|---|---|
| Festkörper-Gehalt | 38 Gew.-% |
| Ladungsdichte | 41,47 meq•(100 g)$^{-1}$ |

Beispiel A.5: Bindemittel für Grundbeschichtung

Die Herstellung erfolgte in Analogie zu Beispiel A.1.

Eingesetzt werden 133,40 g eines Polyesters mit einer Hydroxyl-Zahl von ca. 56,1 mg KOH·g$^{-1}$ (Bester® 42 H, Fa. Poliolchimica S.p.A.), 14,82 g eines Polypropylenglykols mit einer Hydroxyl-Zahl von ca. 56,1 mg KOH·g$^{-1}$ (Dow Voranol P 2000, Fa. Dow Chemical), 23,72 g 1,4-Butandiol, 1,48 g Trimethylolpropan, 22,23 g Dimethylolpropionsäure, 74,11 g N-Methylpyrrolidon, 161,37 g Isophorondiisocyanat, 545,89 g Leitungswasser, 16,77 g Triethylamin, 6,20 g Ethylendiamin. NCO-Gehalt des Polyurethan-Prepolymers (Theorie): 4,02 Gew.-%

Es wird eine stabile Polyurethan-Dispersion mit folgender Charakteristik erhalten:

| Charakteristik | semitransluzent |
|---|---|
| Festkörper-Gehalt | 38 Gew.-% |
| Ladungsdichte | 43,62 meq•(100 g)$^{-1}$ |

Beispiel A.6: Bindemittel für Grundbeschichtung

Die Herstellung erfolgte in Analogie zu Beispiel A.1.

Eingesetzt werden 35,47 g Bisphenol A-glycerolat Diacrylat, 141,88 g eines Polyesters mit einer Hydroxyl-Zahl von ca. 56,1 mg KOH·g$^{-1}$ (Bester® 42 H, Fa. Poliolchimica S.p.A.), 14,19 g 1,4-Butandiol, 21,28 g Dimethylolpropionsäure, 0,57 g 2,6-Di-tert.-butyl-p-kresol, 70,94 g N-Methylpyrrolidon, 142,88 g Isophorondiisocyanat, 549,06 g Leitungswasser, 16,06 g Triethylamin, 7,68 g Ethylendiamin.

NCO-Gehalt des Polyurethan-Prepolymers (Theorie): 3,59 Gew.-%

Es wird eine stabile Polyurethan-Dispersion mit folgender Charakteristik erhalten:

| Charakteristik | semitransluzent |
|---|---|
| Festkörper-Gehalt | 38 Gew.-% |
| Ladungsdichte | 41,75 meq•(100 g)$^{-1}$ |

Beispiel A.7: Bindemittel für Grundbeschichtung

Die Herstellung erfolgte in Analogie zu Beispiel A.1.

Eingesetzt werden 56,72 g Bisphenol A-glycerolat Diacrylat, 126,05 g eines Polyesters mit einer Hydroxyl-Zahl von ca. 56,1 mg KOH·g$^{-1}$ (Bester® 42 H, Fa. Poliolchimica S.p.A.), 12,60 g 1,4-Butandiol, 18,91 g Dimethylolpropionsäure, 0,63 g 2,6-Di-tert.-butyl-p-kresol, 63,02 g N-Methylpyrrolidon, 143,13 g Isophorondiisocyanat, 556,98 g Leitungswasser, 14,26 g Triethylamin, 7,70 g Ethylendiamin. NCO-Gehalt des Polyurethan-Prepolymers (Theorie): 3,65 Gew.-%

Es wird eine stabile Polyurethan-Dispersion mit folgender Charakteristik erhalten:

| Charakteristik | semitransluzent |
|---|---|
| Festkörper-Gehalt | 38 Gew.-% |
| Ladungsdichte | 37,10 meq•(100 g)$^{-1}$ |

Materialeigenschaften der Polyurethan-Dispersionen aus den Beispielen A.1 bis A.7 nach Trocknung bei Normklima

| Beispiel | A.1 | A.2 | A.3 | A.4 | A.5 | A.6 | A.7 |
|---|---|---|---|---|---|---|---|
| Zugfestigkeit $\delta_M$ | 42,6 MPa | 46,8 MPa | 39,4 MPa | 33,6 MPa | 11,7 MPa | 48,8 MPa | 22,8 MPa |
| Bruchdehnung $\epsilon_B$ | 395 % | 416 % | 423 % | 332 % | 328 % | 390 % | 336 % |
| Pendelhärte nach König | 81 s | 71 s | 48 s | 69 s | 136 s | 110 s | 127 s |

Materialeigenschaften nach EN ISO 527 (Aufzug: 250 $\mu$m Nassfilmstärke)

Pendelhärte nach König nach DIN 53157 (Aufzug: 150 $\mu$m Nassfilmstärke)

Normklima: 7 d Trocknung bei 23° C und 50 % relative Luftfeuchtigkeit

EP 1 311 639 B1

Beispiele B: Flexible und postforminfähige Beschichtungssysteme auf Basis von Polyurethan-Dispersionen

Beispiel B.1: Grund- und Deckbeschichtung

| (1) | 500,0 g | Polyurethan-Dispersion aus Beispiel A.1 (Bindemittel) |
|---|---|---|
| (2) | 8,0 g | Acematt TS 100 (Mattierungsmittel) |
| (3) | 30,0 g | Dowanol DPnB (Koaleszenzhilfsmittel) |
| (4) | 5,0 g | Byk-341 (Entlüfter) |
| (5) | 4,0 g | Byk-024 (Entschäumer) |
| (6) | 40,0 g | Butylglykol (Koaleszenzhilfsmittel) |
| (7) | 1140,0 g | Polyurethan-Dispersion aus Beispiel A.1 (Bindemittel) |
| (8) | 169,0 g | Leitungswasser |
| (9) | 10,0 g | Acrysol RM-8 (Rheologieadditiv) |
| (10) | 2,0 g | Byk-024 (Entschäumer) |
| (11) | 24,6 g | Darocur 1173 (Photoinitiator) |
| | | ($\alpha$-Hydroxy-$\alpha$-methylpropiophenon (HMEPK)) |

Bezugsquellen:

| (2) | Fa. Degussa-Hüls AG |
|---|---|
| (3) | Fa. Dow Chemical Europa SA |
| (4), (5), (10) | Fa. Byk Chemie GmbH |
| (11) | Fa. Ciba Spezialitätenchemie AG |

Beispiel B.2: Grund- und Deckbeschichtung

Die Herstellung erfolgte in Analogie zu Beispiel A.1.

Eingesetzt werden 500,0 g + 1140,0 g der Polyurethan-Dispersion aus

Beispiel A.2.

Materialeigenschaften des flexiblen und postformingfähigen Beschichtungssystems aus Beispiel B.1
nach forcierter Trocknung und Strahlenhärtung mittels UV-induzierter radikalischer Polymerisation

| Beispiel | A.1 | B.1 | | | |
|---|---|---|---|---|---|
| Trocknungsbedingungen | Normklima | 5 min 50 °C | 10 min 50 °C | 5 min 80 °C | 10 min 80 °C |
| Zugfestigkeit $\delta_M$ | 42,6 MPa | 37,2 MPa | 54,1 MPa | 58,3 MPa | 65,0 MPa |
| Bruchdehnung $\epsilon_B$ | 395 % | 191 % | 243 % | 222 % | 262 % |
| Pendelhärte nach König | 81 s | 103 s | | | |

Materialeigenschaften nach EN ISO 527 (Aufzug: 250 $\mu$m Nassfilmstärke)

Pendelhärte nach König nach DIN 53157 (Aufzug: 150 $\mu$m Nassfilmstärke)

Strahlenhärtung: Quecksilberhochdruckstrahler Typ IST-CK, 80 W cm$^{-1}$

Normklima: 7 d Trocknung bei 23° C und 50 % relative Luftfeuchtigkeit (ohne Strahlenhärtung)

EP 1 311 639 B1

## Materialeigenschaften des flexiblen und postformingfähigen Beschichtungssystems aus Beispiel B.2 nach forcierter Trocknung und Strahlenhärtung mittels UV-induzierter radikalischer Polymerisation

| Beispiel | A.2 | B.2 | | | |
|---|---|---|---|---|---|
| Trocknungsbedingungen | Normklima | 5 min 50 °C | 10 min 50 °C | 5 min 80 °C | 10 min 80 °C |
| Zugfestigkeit $\delta_M$ | 46,8 MPa | 33,7 MPa | 55,6 MPa | 49,4 MPa | 62,3 MPa |
| Bruchdehnung $\epsilon_B$ | 416 % | 202 % | 249 % | 200 % | 263 % |
| Pendelhärte nach König | 71 s | 93 s | | | |

Materialeigenschaften nach EN ISO 527 (Aufzug: 250 $\mu$m Nassfilmstärke)

Pendelhärte nach König nach DIN 53157 (Aufzug: 150 $\mu$m Nassfilmstärke)

Strahlenhärtung: Quecksilberhochdruckstrahler, 80 W cm$^{-1}$

Normklima: 7 d Trocknung bei 23° C und 50 % relative Luftfeuchtigkeit (ohne Strahlenhärtung)

EP 1 311 639 B1

Beispiel C: Fertigteilprodukte

Die flexiblen und postformingfähigen Beschichtungssysteme aus den Beispielen B.1 und B.2 werden in einer Auftragsmenge von insgesamt ca. 100 g·m$^{-2}$ (ca. 10 bis 20 μm Trockenschichtdicke) in zwei Arbeitsgängen als Grund- und Deckbeschichtung auf verschiedene Furnierholzplatten (Furniere: Buche, Eiche, Esche) maschinell durch Spritzbeschichtung appliziert, bei 80 °C 5 min bzw. 10 min forciert getrocknet, strahlengehärtet (Quecksilberhochdruckstrahler Typ IST-CK, 80 W cm$^{-1}$, 800 bis 1200 mJ cm$^{-2}$) und anschließend einem Direktpostformingverfahren unterzogen. Die resultierenden Fertigteilprodukte weisen bei Biegeradien von 5 mm glatte und rissfreie Oberflächen auf. Die Materialeigenschaften entsprechen den Beispielen B.1 bis B.2.

**Patentansprüche**

1. Flexibles und/oder postformingfähiges Beschichtungssystem für Furnierholz und weitere Beschichtungsmaterialien auf Basis von mindestens einer Polyurethan-Dispersion, welches **dadurch** erhältlich ist, dass man

   a) 25 bis 250 Gew.-Teile einer Polyol-Komponente (A), umfassend

   $a_1$) 10 bis 100 Gew.-Teile eines ungesättigten polymeren Polyols (A)(i) mit einer oder mehreren radikalisch polymerisierbaren Doppelbindungen und mit zwei oder mehreren Hydroxyl-Gruppen und einer Molekularmasse von 200 bis 6 000 Dalton
   und/oder
   10 bis 100 Gew.-Teile eines polymeren Polyols (A)(ii) mit zwei oder mehreren Hydroxyl-Gruppen und einer Molekularmasse von 500 bis 6 000 Dalton
   $a_2$) 2,5 bis 25 Gew.-Teile einer niedermolekularen Polyol-Komponente (A)(iii) mit zwei oder mehreren Hydroxyl-Gruppen und einer Molekularmasse von 50 bis 249 Dalton,
   $a_3$) 2,5 bis 25 Gew.-Teile einer niedermolekularen und anionogenen Polyol-Komponente (A)(iv) mit zwei oder mehreren Hydroxyl-Gruppen und einer oder mehreren inerten Carbonsäure- und/oder Sulfonsäure-Gruppe(n) und einer Molekularmasse von 100 bis 1 000 Dalton,

   b) 50 bis 250 Gew.-Teile einer Polyisocyanat-Komponente (B), umfassend mindestens ein Polyisocyanat, Polyisocyanat-Derivat oder Polyisocyanat-Homologes mit zwei oder mehreren aliphatischen und/oder aromatischen Isocyanat-Gruppen,

   c) 2 bis 50 Gew.-Teile einer Polyamin-Komponente (C), umfassend

   $c_1$) 1 bis 25 Gew.-Teile eines tertiären Amins und/oder eines Alkalihydroxides als Neutralisations-Komponente (C)(i)
   und
   $c_2$) 1 bis 25 Gew.-Teile eines Polyamins mit zwei oder mehreren primären und/oder sekundären Amino-Gruppen als Kettenverlängerungs-Komponente (C)(ii),

   d) 0 bis 100 Gew.-Teile einer Lösemittel-Komponente (D), umfassend ein inertes organisches Lösemittel und/oder einen copolymerisierbaren Reaktivverdünner mit einer oder mehreren radikalisch polymerisierbaren Doppelbindungen, und

   e) 50 bis 1 500 Gew.-Teile Wasser
   zu einer lösemittelfreien oder lösemittelarmen Polyurethan-Dispersion umsetzt und diese anschließend durch Zugabe von

   f) ggf. 0,5 bis 50 Gew.-Teile einer Photoinitiator-Komponente (E) und

   g) 0,5 bis 500 Gew.-Teilen einer Formulierungs-Komponente (F)

   zum Endprodukt (Postforming-Beschichtung) weiterverarbeitet.

2. Beschichtungssystem nach Anspruch 1,
   **dadurch gekennzeichnet,**

**dass** die Komponente (A)(i) aus ungesättigten Polyester-Polyolen oder andere Verbindungen mit einem Gehalt an radikalisch polymerisierbaren Doppelbindungen von 100 bis 1000 meq·(100 g)$^{-1}$ und mit einer mittleren Molekularmasse von 200 bis 3000 Dalton ausgewählt ist.

3. Beschichtungssystem nach einem der Ansprüche 1 oder 2,
**dadurch gekennzeichnet,**
**dass** die Komponente (A) (ii) aus Polyalkylenglykolen, aliphatischen und/oder aromatischen Polyestern, Polycaprolactonen, Polycarbonaten, Alkydharzen, Umsetzungsprodukten aus polyfuktionellen Epoxidharzen und ungesättigten Fettsäuren, $\alpha,\omega$-Polymethacrylatdiolen, $\alpha,\omega$-Dihydroxyalkylpolydimethylsiloxanen, Makromonomeren, Telechelen oder Gemischen daraus ausgewählt ist.

4. Beschichtungssystem nach einem der Ansprüche 1 bis 3,
**dadurch gekennzeichnet,**
**dass** die Photoinitiator-Komponente (E) aus Verbindungen ausgewählt ist, bei denen eine Radikalbildung durch eine homolytische Spaltung (intramolekulare Spaltung) oder durch eine intermolekulare Wasserstoffabstraktion hervorgerufen wird.

5. Beschichtungssystem nach einem der Ansprüche 1 bis 4,
**dadurch gekennzeichnet,**
**dass** es sich bei der Photoinitiator-Komponente (E) um $\alpha$-Spalter wie Benzoinether, Benzilketale, $\alpha,\alpha$-Dialkoxyacetophenone, $\alpha$-Hydroxyalkylphenone bzw. $\alpha$-Hydroxyalkylarylketone, $\alpha$-Aminoalkylphenone, Acylphosphinoxide, Phosphinoxidketale und Wasserstoffabstraktoren (H-Abstraktoren) wie Benzil, Benzophenon und substituierte Benzophenone, Thioxanthone oder Gemische daraus handelt.

6. Beschichtungssystem nach einem der Ansprüche 1 bis 5,
**dadurch gekennzeichnet,**
**dass** es sich bei der Formulierungs-Komponente (F) um Entschäumer, Entlüfter, Gleit- und Verlaufadditive, strahlenhärtende Additive, Dispergieradditive, Substratnetzadditive, Hydrophobierungsmittel, Rheologieadditive wie Polyurethan-Verdicker, Koaleszenzhilfsmittel, Mattierungsmittel sowie ggf. um Füllstoffe, Pigmente und weitere Additive in geeigneter Kombination und/oder wässrige oder nichtwässrige Polymere bzw. Polymerzusammensetzungen handelt.

7. Beschichtungssystem nach einem der Ansprüche 1 bis 6,
**dadurch gekennzeichnet,**
**dass** der Festkörper-Gehalt des postformingfähigen Beschichtungssystems auf Basis der Komponenten (A) bis (F) auf 10 bis 70 Gew.-% eingestellt ist.

8. Beschichtungssystem nach einem der Ansprüche 1 bis 7,
**dadurch gekennzeichnet,**
**dass** der Lösemittel-Gehalt des postformingfähigen Beschichtungssystems auf Basis der Komponenten (A) bis (F) auf 0 bis 10 Gew.-% eingestellt ist.

9. Beschichtungssystem nach einem der Ansprüche 1 bis 8,
**dadurch gekennzeichnet,**
**dass** die Polyurethan-Dispersionen auf Basis der Komponenten (A) bis (D) bei physikalischer Trocknung zur Filmbildung befähigt sind.

10. Beschichtungssystem nach einem der Ansprüche 1 bis 9,
**dadurch gekennzeichnet,**
**dass** der Gehalt an radikalisch polymerisierbaren Doppelbindungen im Polyurethan-Polymer auf Basis der Komponenten (A) bis (C) bzw. (A) bis (D) bei Einsatz eines Reaktivverdünners auf 0 bis 100 meq·(100 g)$^{-1}$, vorzugsweise auf 30 bis 50 meq·(100 g)$^{-1}$, eingestellt ist.

11. Verfahren zur Herstellung eines flexiblen und/oder postformingfähigen Beschichtungssystems nach einem der Ansprüche 1 bis 10,
**dadurch gekennzeichnet,**
**dass** man

a$_1$) einen Premix aus den Komponenten (A) und ggf. (D) herstellt und/oder die Komponenten (A)(i), (A)(ii), (A)(iii), (B) und ggf. (D) in Gegenwart eines Katalysators zu einem Polyurethan-Preaddukt umsetzt,

a$_2$) den Premix aus Stufe a$_1$) mit der Komponente (B) ggf. stufenweise zu einem Polyurethan-Prepolymer umsetzt und/oder das Preaddukt aus Stufe a$_1$) mit der Komponente (A)(iv) umsetzt,

a$_3$) das Polyurethan-Prepolymer aus Stufe a$_2$) dann vor oder während der Dispergierung in Wasser mit der Komponente (C) (i) neutralisiert,

a$_4$) das neutralisierte und dispergierte Polyurethan-Prepolymer aus Stufe a$_3$) anschließend mit der Komponente (C)(ii) kettenverlängert,

a$_5$) die lösemittelfreie oder lösemittelarme Polyurethan-Dispersion aus Stufe a$_4$) mit den Komponenten (E) und (F) in beliebiger Reihenfolge formuliert und

a$_6$) ggf. die lösemittelfreie oder lösemittelarme Polyurethan-Dispersion aus Stufe a$_5$) mit weiteren wässrigen Polymerdispersionen und/oder anderen Polymeren kombiniert.

**12.** Verwendung des Beschichtungssystems nach einem der Ansprüche 1 bis 10 als Postforming-Beschichtung für den Systemaufbau aus Grund- und/oder Deckbeschichtung(en) für Furnierholz und weitere Beschichtungsmaterialien.

**13.** Verwendung nach Anspruch 12,
**dadurch gekennzeichnet,**
**dass** als weitere Beschichtungsmaterialien Papiere und/oder Kartonagen und/oder Kunststoff-Folien und/oder Metall-Folien eingesetzt werden.

**14.** Verwendung nach einem der Ansprüche 12 oder 13,
**dadurch gekennzeichnet,**
**dass** für den Systemaufbau aus Grund- und/oder Deckbeschichtung(en) als Bindemittel eine oder mehrere Polyurethan-Dispersionen auf Basis der Komponenten (A) bis (D) sowie ggf. weitere Polymere und/oder Reaktivharze eingesetzt werden.

**15.** Verwendung nach einem der Ansprüche 12 und 14,
**dadurch gekennzeichnet,**
**dass** die Applikation als Grund- und/oder Deckbeschichtung in einer oder mehreren Schichten in einer Menge von insgesamt 1 bis 1000 g·m$^{-2}$ der zu beschichtenden Fläche und pro Arbeitsgang erfolgt.

**16.** Verwendung nach einem der Ansprüche 12 bis 15,
**dadurch gekennzeichnet,**
**dass** die Applikation als Grund- und/oder Deckbeschichtung in einer oder mehreren Schichten mit einer Trockenschichtdicke von insgesamt 5 bis 500 μm erfolgt.

**17.** Verwendung nach einem der Ansprüche 12 bis 16,
**dadurch gekennzeichnet,**
**dass** man die

b$_1$) Furniere und/oder weitere Beschichtungsmaterialien auf einem ggf. profilierten Blind- und/oder Trägermaterial mit geeigneten Leimen verklebt,

b$_2$) das vorgefertigte Werkstück aus Stufe b$_1$) einem Schliff und einer Entstaubung unterzieht sowie ggf. durch Applikation von Entharzungsmitteln und/oder Aufhellungsmitteln und/oder Färbe- und Beizmitteln und/oder Porenfüllern und ggf. durch forcierte Trocknung behandelt,

b$_3$) die Polyurethan-Dispersion (Postforming-Beschichtung) aus Stufe a$_4$), a$_5$) oder a$_6$) ggf. in Kombination mit weiteren Polymeren und/oder Reaktivharzen in einer oder mehreren Schichten als Grund- und/oder Deckbeschichtung, ggf. pigmentiert auf das Werkstück aus Stufe b$_1$) durch Gieß-, Spritz- oder Walzauftrag appliziert, ggf. forciert trocknet, ggf. mittels UV-induzierter radikalischer Polymerisation aushärtet und ggf. einem Furnierschliff und einer Entstaubung unterzieht und diese Verfahrensschritte ggf. wiederholt, wobei die Schritte $b_1$), $b_2$) und $b_3$) in beliebiger Reihenfolge durchgeführt werden können.

$b_4$) das beschichtete Werkstück aus den Stufen $b_1$) bis $b_3$) einem Postforming-Direktverfahren oder einem Postforming-Normalverfahren unterzieht und schließlich

$b_5$) das fertige Formteil aus Stufe $b_4$) abkühlt und abstapelt.

18. Verwendung nach Anspruch 17,
    **dadurch gekennzeichnet,**
    **dass** alternativ zu Stufe $b_2$) die Strahlenhärtung mittels UV-induzierter radikalischer Polymerisation erst nach Stufe $b_4$) erfolgt.

19. Verwendung nach Anspruch 17,
    **dadurch gekennzeichnet,**
    **dass** alternativ zu Stufe $b_3$) die Applikation der formulierten Polyurethan-Dispersion (Postforming-Beschichtung) aus Stufe $a_4$), $a_5$) oder $a_6$) zweikomponentig in Kombination mit geeigneten Härtern erfolgt.

20. Verwendung nach einem der Ansprüche 12 bis 19,
    **dadurch gekennzeichnet,**
    **dass** in Abhängigkeit von der Verformbarkeit der zu bearbeiteten Furniere bzw. Beschichtungsmaterialien Biegeradien von 1 bis 100 mm, vorzugsweise 5 bis 6 mm, hergestellt werden.

21. Verwendung nach einem der Ansprüche 12 bis 20,
    **dadurch gekennzeichnet,**
    **dass** in Abhängigkeit von der Verformbarkeit der zu bearbeiteten Furniere bzw. Beschichtungsmaterialien die Verformung ohne Bedampfung oder Befeuchtung durchgeführt wird.

22. Verwendung nach einem der Ansprüche 12 bis 21,
    **dadurch gekennzeichnet,**
    **dass** nach erfolgtem Verformen noch eine Nachhärtung durch Selbstvernetzung erfolgt.

23. Verwendung nach einem der Ansprüche 12 bis 22,
    **dadurch gekennzeichnet,**
    **dass** die Polyurethan-Dispersion aus Stufe $a_4$), $a_5$) oder $a_6$) als Klebstoff für die Verklebung von Furnieren bzw. weiteren Beschichtungsmaterialien mit beliebigen Blind- oder/und Trägermaterialien eingesetzt wird.

24. Verwendung nach einem der Ansprüche 12 bis 23,
    **dadurch gekennzeichnet,**
    **dass** die Polyurethan-Dispersion aus Stufe $a_4$), $a_5$) oder $a_6$) auch für Kaschierung, Ummantelung, Membranpresstechnik, Softforming an Kantenanleimmaschinen, Verformung sonstiger Materialien, wie z.B. lackierte OSB-Platten, eingesetzt wird.

25. Verwendung nach einem der Ansprüche 12 bis 24 als Grund- und Deckbeschichtung für Furnierholz in Form von Möbeln, Fenstern, Leisten, Türen, Zargen, Parkettboden, Furnettböden sowie weiteren Fertigteilprodukten, Postformingelementen und Formteilen beliebiger Geometrie.

26. Verwendung nach einem der Ansprüche 12 bis 25,
    **dadurch gekennzeichnet,**
    **dass** es sich bei den Furnieren um Vollhölzer auf Basis von Buche, Eibe, Fichte, Kiefer, Lärche, Tanne, Weymouthskiefer, Zirbelkiefer, Ahorn, Birke, Birnbaum, Eiche, Erle, Esche, Kirschbaum, Linde, Nußbaum, Pappel, Platane, Rüster/Ulme, Brasilkiefer, Abachi, Afrormosia, Afzelia, Ebenholz/ Makassarebenholz, Limba, Mahagoni, Makore, Mansonia, Okoume/Gabun, Padouk, ostindischem Palisander, Rio-Palisander, Ramin, Rosenholz, Sapelli/Sapelli-Mahagoni, Sen, Sipo, Teak, Wenge, Whitewood oder Zingana/Zebrano handelt.

27. Verwendung nach einem der Ansprüche 12 bis 26,
    **dadurch gekennzeichnet,**
    **dass** als Grundbeschichtung die Polyurethan-Dispersion (Postforming-Beschichtung) aus Stufe $a_4$), $a_5$) oder $a_6$)

und als Deckbeschichtung ein ein- oder mehrschichtiger Acryllack eingesetzt wird.

**28.** Verwendung nach einem der Ansprüche 12 bis 27,
**dadurch gekennzeichnet,**
**dass** es sich bei den Blind- und/oder Trägermaterialien um Holz, Holzwerkstoffe aller Art, Kunststoffe aller Art, Metalle aller Art, MDF, HDF oder Verbundwerkstoffe aller Art handelt.

**Claims**

**1.** A flexible and/or postformable coating system for veneered wood and further coating materials based on at least one polyurethane dispersion, which is obtainable by reacting

a) 25 to 250 parts by weight of a polyol component (A) comprising

$a_1$) 10 to 100 parts by weight of an unsaturated polymeric polyol (A)(i) having one or more double bonds capable of free radical polymerization and two or more hydroxyl groups and a molecular weight of 200 to 6 000 dalton
and/or
10 to 100 parts by weight of a polymeric polyol (A)(ii) having two or more hydroxyl groups and a molecular weight of 500 to 6 000 dalton,
$a_2$) 2.5 to 25 parts by weight of a low molecular weight polyol component (A)(iii) having two or more hydroxyl groups and a molecular weight of 50 to 249 dalton,
$a_3$) 2.5 to 25 parts by weight of a low molecular weight and anionogenic polyol component (A)(iv) having two or more hydroxyl groups and one or more inert carboxyl and/or sulfo group(s) and a molecular weight of 100 to 1 000 dalton,

b) 50 to 250 parts by weight of a polyisocyanate component (B), comprising at least one polyisocyanate, polyisocyanate derivative and/or polyisocyanate homolog having two or more aliphatic and/or aromatic isocyanate groups,

c) 2 to 50 parts by weight of a polyamine component (C), comprising

$c_1$) 1 to 25 parts by weight of a tertiary amine and/or of an alkali metal hydroxide as neutralizing component (C)(i)
and
$c_2$) 1 to 25 parts by weight of a polyamine having two or more primary and/or secondary amino groups as chain-extender component (C)(ii),

d) 0 to 100 parts by weight of a solvent component (D), comprising an inert organic solvent and/or a copolymerizable reactive diluent having one or more double bonds capable of free radical polymerization, and

e) 50 to 1 500 parts by weight of water
to give a solvent-free or low-solvent polyurethane dispersion and then further processing this by adding

f) if required, 0.5 to 50 parts by weight of a photoinitiator component (E) and

g) 0.5 to 500 parts by weight of a formulation component (F)

to give the end product (postforming coating).

**2.** The coating system as claimed in claim 1, **characterized in that** the component (A)(i) is selected from unsaturated polyesterpolyols or other compounds which contain 100 to 1 000 meq·(100 g)$^{-1}$ of double bonds capable of free radical polymerization and have an average molecular weight of 200 to 3 000 dalton.

**3.** The coating system as claimed in either of claims 1 and 2, **characterized in that** the component (A)(ii) is selected from polyalkylene glycols, aliphatic and/or aromatic polyesters, polycaprolactones, polycarbonates, alkyd resins, reaction products of polyfunctional epoxy resins and unsaturated fatty acids, $\alpha,\omega$-polymethacrylatediols $\alpha,\omega$-dihy-

droxyalkylpolydimethylsiloxanes, macromonomers, telechels or mixtures thereof.

4. The coating system as claimed in any of claims 1 to 3, **characterized in that** the photoinitiator component (E) is selected from compounds in which free radical formation is caused by homolytic cleavage (intramolecular cleavage) or by intermolecular hydrogen abstraction.

5. The coating system as claimed in any of claims 1 to 4, **characterized in that** the photoinitiator component (E) is an $\alpha$-cleaver, such as benzoin ethers, benzil ketals, $\alpha,\alpha$-dialkoxyacetophenones, $\alpha$-hydroxyalkylphenones or $\alpha$-hydroxyalkyl aryl ketones, $\alpha$-aminoalkylphenones, acylphosphine oxides, phosphine oxide ketals or an hydrogen abstractor (H abstractor), such as benzils, benzophenones or substituted benzophenones, thioxanthones or a mixture thereof.

6. The coating system as claimed in any of claims 1 to 5, **characterized in that** the formulation component (F) is an antifoam, deaerator, lubricating or leveling additive, radiation-curable additive, dispersant, substrate wetting additive, water repellent, rheology additive, such as a polyurethane thickener, coalescence auxiliary, dulling agent or optionally a filler, pigment or further additive in suitable combination and/or an aqueous or nonaqueous polymer or polymer composition.

7. The coating system as claimed in any of claims 1 to 6, **characterized in that** the solids content of the postformable coating system based on the components (A) to (F) is adjusted to 10 to 70% by weight.

8. The coating system as claimed in any of claims 1 to 7, **characterized in that** the solvent content of the postformable coating system based on the components (A) to (F) is adjusted to 0 to 10% by weight.

9. The coating system as claimed in any of claims 1 to 8, **characterized in that** the polyurethane dispersions based on the components (A) to (D) are capable of film formation on physical drying.

10. The coating system as claimed in any of claims 1 to 9, **characterized in that** the content of double bonds capable of free radical polymerization in the polyurethane polymer based on the components (A) to (C) or (A) to (D) when a reactive diluent is used is adjusted to 0 to 100 meq·$(100 \text{ g})^{-1}$, preferably to 30 to 50 meq·$(100 \text{ g})^{-1}$.

11. A method for the production of a flexible and/or postformable coating system as claimed in any of claims 1 to 10, **characterized in that**

$a_1$) a premix is prepared from the components (A) and, if required, (D) and/or the components (A)(i), (A)(ii), (A)(iii), (B) and, if required, (D) are reacted in the presence of a catalyst to give a polyurethane preadduct,

$a_2$) the premix from stage $a_1$) is reacted with the component (B), optionally stepwise, to give a polyurethane prepolymer and/or the preadduct from stage $a_1$) is reacted with the component (A)(iv),

$a_3$) the polyurethane prepolymer from stage $a_2$) is then neutralized, before or during the dispersing in water, with the component (C)(i),

$a_4$) the neutralized and dispersed polyurethane prepolymer from stage $a_3$) is then subjected to chain extension with the component (C)(ii),

$a_5$) the solvent-free or low-solvent polyurethane dispersion from stage $a_4$) is formulated with the components (E) and (F) in any desired sequence and

$a_6$) the solvent-free or low-solvent polyurethane dispersion from stage $a_5$) is combined with further aqueous polymer dispersions and/or other polymers.

12. The use of the coating system as claimed in any of claims 1 to 10 as a postforming coating for producing the system comprising base and/or top coat(s) for veneered wood and further coating materials.

13. The use as claimed in claim 12, **characterized in that** the further coating materials used are papers and/or cardboard boxes and/or plastics films and/or metal foils.

14. The use as claimed in either of claims 12 or 13, **characterized in that** one or more polyurethane dispersions based on the components (A) to (D) and, if required, further polymers and/or reactive resins are used as binders for producing the system comprising base and/or top coat(s).

15. The use as claimed in either of claims 12 and 14, **characterized in that** the application as base and/or top coat is effected in one or more layers in a total amount of 1 to 1 000 $g \cdot m^{-2}$ of the area to be coated and per operation.

16. The use as claimed in any of claims 12 to 15, **characterized in that** the application as base and/or top coat is effected in one or more layers with a total dry coat thickness of 5 to 500 µm.

17. The use as claimed in any of claims 12 to 16, **characterized in that**

$b_1$) the veneers and/or further coating materials are adhesively bonded to an optionally profiled blank and/or base material with suitable glues,

$b_2$) the prefabricated workpiece from stage $b_1$) is subjected to grinding and dedusting and is treated, optionally by application of deresinifying agents and/or brighteners and/or colorants and pickling agents and/or pore fillers and optionally by forced drying,

$b_3$) the polyurethane dispersion (postforming coating) from stage $a_4$), $a_5$) or $a_6$), optionally in combination with further polymers and/or reactive resins, is applied in one or more coats as base and/or top coat, optionally in pigmented form, to the workpiece from stage $b_1$) by casting, spray coating or roll-coating, optionally subjected to forced drying, optionally cured by means of UV-induced free radical polymerization and optionally subjected to a veneer grinding and dedusting and optionally these process steps are repeated, it being possible for the steps $b_1$), $b_2$) and $b_3$) to be carried out in any desired sequence,

$b_4$) the coated workpiece from stages $b_1$) to $b_3$) is subjected to a direct postforming method or a standard postforming method and finally

$b_5$) the finished shaped article from stage $b_4$) is cooled and stacked.

18. The use as claimed in claim 17, **characterized in that**, as an alternative to stage $b_2$), the radiation curing by means of UV-induced free radical polymerization is not effected until after stage $b_4$).

19. The use as claimed in claim 17, **characterized in that**, as an alternative to stage $b_3$), the application of the formulated polyurethane dispersion (postforming coating) from stage $a_4$), $a_5$) or $a_6$) is effected in two-component form in combination with suitable curing agents.

20. The use as claimed in any of claims 12 to 19, **characterized in that**, depending on the formability of the veneers or coating materials to be processed, bending radii of 1 to 100 mm, preferably 5 to 6 mm, are produced.

21. The use as claimed in any of claims 12 to 20, **characterized in that**, depending on the formability of the veneers or coating materials to be processed, the forming is carried out without steam treatment or moistening.

22. The use as claimed in any of claims 12 to 21, **characterized in that** postcuring is effected by self-crosslinking after forming is complete.

23. The use as claimed in any of claims 12 to 22, **characterized in that** the polyurethane dispersion from stage $a_4$), $a_5$) or $a_6$) is used as an adhesive for the adhesive bonding of veneers or further coating materials to any desired blank and/or base materials.

24. The use as claimed in any of claims 12 to 23, **characterized in that** the polyurethane dispersion from stage $a_4$), $a_5$) or $a_6$) is also used for lamination, encasing, membrane pressing technique, softforming on edge gluing machines, or forming of other materials, such as, for example, coated OSB boards.

25. The use as claimed in any of claims 12 to 24 as a base and top coat for veneered wood in the form of furniture, windows, strips, doors, casings, parquet flooring, veneered floors and further finished products, postforming elements and shaped articles of any desired geometry.

**EP 1 311 639 B1**

**26.** The use as claimed in any of claims 12 to 25, **characterized in that** the veneers are solid timbers based on beech, yew, spruce, pine, larch, fir, Weymouth pine, Swiss stone-pine, maple, birch, pear, oak, alder, ash, cherry, lime, walnut, poplar, plane, elm, Brazilian pine, abachi, afrormosia, afzelia, ebony/macassar ebony, limba, mahogany, makore, mansonia, okoume/Gaboon, padouk, East Indian palisander, Rio palisander, ramin, rosewood, sapelli/ sapelli mahogany, sen, sipo, teak, wenge, whitewood or zingana/zebrano.

**27.** The use as claimed in any of claims 12 to 26, **characterized in that** the polyurethane dispersion (postforming coating) from stage $a_4$), $a_5$) or $a_6$) is used as the base coat and a one-layer or multilayer acrylic finish is used as the top coat.

**28.** The use as claimed in any of claims 12 to 27, **characterized in that** the blank and/or base materials are wood, woodbase materials of all kinds, plastics of all kinds, metals of all kinds, MDF, HDF or composite materials of all kinds.

**Revendications**

**1.** Système de revêtement flexible et/ou pouvant être post-formé pour contreplaqué et autres matériaux de revêtement sur la base d'au moins une dispersion de polyuréthane, qui est obtenu en convertissant

a) 25 à 250 parties en poids d'un composé polyol (A) comprenant

$a_1$) 10 à 100 parties en poids d'un polyol polymérique insaturé (A)(i) avec une ou plusieurs doubles liaisons pouvant être polymérisées par polymérisation radicalaire et avec deux ou plusieurs groupes hydroxyle et présentant une masse moléculaire de 200 à 6000 dalton, et/ou
10 à 100 parties en poids d'un polyol polymérique (A)(ii) avec deux ou plusieurs groupes hydroxyle et présentant une masse moléculaire de 500 à 6000 dalton,
$a_2$) 2,5 à 25 parties en poids d'un composant polyol à bas poids moléculaire (A)(iii) avec deux ou plusieurs groupes hydroxyle et présentant une masse moléculaire de 50 à 249 dalton,
$a_3$) 2,5 à 25 parties en poids d'un composant polyol à base poids moléculaire et anionogène (A)(iv) avec deux ou plusieurs groupes hydroxyle et un ou plusieurs groupes inertes d'acide carboxylique et/ou d'acide sulfonique et présentant une masse moléculaire de 100 à 1000 dalton,

b) 50 à 250 parties en poids d'un composant polyisocyanate (B) comprenant au moins un polyisocyanate, un dérivé de polyisocyanate ou un homologue de polyisocyanate avec deux ou plusieurs groupes isocyanate aliphatiques et/ou aromatiques,
c) 2 à 50 parties en poids d'un composant polyamine (C), comprenant

$c_1$) 1 à 25 parties en poids d'une amine tertiaire et/ou d'un hydroxyde alcalin comme élément neutralisant (C)(i), et
$c_2$) 1 à 25 parties en poids d'une polyamine avec deux ou plusieurs groupes amino primaires et/ou secondaires comme éléments de prolongement de chaîne (C)(ii),

d) 0 à 100 parties en poids d'un composant solvant (D) comprenant un solvant organique inerte et/ou un diluant de réactif co-polymérisable avec une ou plusieurs doubles liaisons polymérisables par polymérisation radicalaire, et
e) 50 à 100 parties en poids d'eau
en une dispersion de polyurtéhane exempte de solvant ou pauvre en solvant et en transformant celle-ci ensuite par addition de
f) éventuellement, 0,5 à 50 parties en poids d'un composant photo-initiateur (E) et
g) 0,5 à 500 parties en poids d'un composant de formulation (F), en produit final (revêtement de post-formage).

**2.** Système de revêtement selon la revendication 1, **caractérisé en ce que** les composants (A)(i) sont choisis parmi les polyols de polyester insaturés ou autres composés présentant une teneur en doubles liaisons polymérisables par polymérisation radicalaire de 100 à 1000 meq (100 g)$^{-1}$ et avec une masse moléculaire moyenne de 200 à 3000 dalton.

**3.** Système de revêtement selon l'une des revendications 1 ou 2, **caractérisé en ce que** le composant (A)(ii) est choisi parmi les polyalkylène-glycols, les polyesters aliphatiques et/ou aromatiques, les polycaprolactones, les polycarbonates, les résines alkyde, les produits de transformation issus de résines époxy polyfonctionnelles et d'acides gras insaturés, le $\alpha,\omega$-diol de polyméthacrylate, les $\alpha,\omega$-dihydroxyalkylpolydiméthylsiloxanes, les macro-monomères, les téléchèles ou leurs mélanges.

4. Système de revêtement selon l'une des revendications 1 à 3, **caractérisé en ce que** le composant photo-initiateur (E) est choisi dans les composés dans lesquels la formation de radical est entraînée par un clivage homolytique (clivage intramoléculaire) ou par une abstraction intermoléculaire d'hydrogène.

5. Système de revêtement selon l'une quelconque des revendications 1 à 4, **caractérisé en ce que** le composant photo-initiateur (E) est un élément de clivage $\alpha$ tel que l'éther de benzoïne, le benzilcétal, la $\alpha,\alpha$-dialcoxyacéto-phénone, l'$\alpha$-hydroxyalkylphénone ou l'$\alpha$-hydroxyalkylarylcétone, l'$\alpha$-aminoalkylphénone, l'acylphosphinoxyde, le cétal de phosphinoxyde, et un abstracteur d'hydrogène (abstracteur de H) tels que le benzyle, le benzophénone et le benzophénone substitué, le thioxanthone ou leurs mélanges.

6. Système de revêtement selon l'une quelconque des revendications 1 à 5, **caractérisé en ce que** le composant de formulation (F) est un agent anti-mousse, un agent anti-air, un additif de glissement et d'écoulement, un additif radio-durcissable, un additif de dispersion, un additif de réticulation du substrat, un agent hydrophobe, un additif rhéologique tel qu'un épaississant de polyuréthane, un agent de coalescence, un agent matifiant et éventuellement une charge, des pigments et autres additifs en combinaison appropriée et/ou des polymères aqueux et non aqueux ou des compositions polymères.

7. Système de revêtement selon l'une quelconque des revendications 1 à 6, **caractérisé en ce que** la teneur en corps solides du système de revêtement pouvant être post-formé est ajustée, sur la base des composants (A) à (F), de 10 à 70 % en poids.

8. Système de revêtement selon l'une quelconque des revendications 1 à 7, **caractérisé en ce que** la teneur en solvant du système de revêtement pouvant être post-formé est ajustée, sur la base des composants (A) à (F), de 0 à 10 % en poids.

9. Système de revêtement selon l'une quelconque des revendications 1 à 8, **caractérisé en ce que** les dispersions de polyuréthane peuvent former un film à base des composants (A) à (D) par séchage physique

10. Système de revêtement selon l'une quelconque des revendications 1 à 9, **caractérisé en ce que** la teneur en doubles liaisons polymérisables par polymérisation radicalaire dans le polymère de polyuréthane sur la base des composants (A) à (C) ou (A) à (D) est ajustée, en utilisant un diluant de réactif, de 0 à 100 meq $(100\ \text{g})^{-1}$, de préférence de 30 à 50 meq $(100\ \text{g})^{-1}$.

11. Procédé de fabrication d'un système de revêtement flexible et/ou pouvant être post-formé selon l'une quelconque des revendications 1 à 10, **caractérisé en ce que**

a$_1$) on produit un pré-mélange des composants (A) et éventuellement (D) et/ou on transforme les composants (A)(i), (A)(ii), (A)(iii), (B) et éventuellement (D) en présence d'un catalyseur en pré-additif de polyuréthane,
a$_2$) on transforme le pré-mélange de l'étape a$_1$) avec le composant (B) éventuellement par étape en un prépolymère de polyuréthane et/ou on transforme le pré-additif de l'étape a$_1$) avec le composant (A)(iv),
a$_3$) on neutralise ensuite le prépolymère de polyuréthane de l'étape a$_2$) avant ou pendant la dispersion dans l'eau avec le composant (C)(i),
a$_4$) on prolonge ensuite la chaîne de prépolymère de polyuréthane neutralisé et dispersé de l'étape a$_3$) avec le composant (C)(ii)
a$_5$) on formule la dispersion de polyuréthane exempte de solvant ou pauvre en solvant de l'étape a$_4$) avec les composants (E) et (F) dans un ordre quelconque, et
a$_6$) on combine éventuellement la dispersion de polyuréthane exempte de solvant ou pauvre en solvant de l'étape a$_5$) avec d'autres dispersions aqueuses de polymère et/ou d'autres polymères.

12. Utilisation du système de revêtement selon l'une quelconque des revendications 1 à 10 sous forme de revêtement de post-formage pour l'élaboration du système à partir de revêtement(s) de base et/ou de surface pour contreplaqué et autres matériaux de revêtement.

**13.** Utilisation selon la revendication 12, **caractérisée en ce que** l'on utilise, comme autres matériaux de revêtement, du papier ou du carton et/ou des feuilles de plastique et/ou des feuilles de métal.

**14.** Utilisation selon l'une quelconque des revendications 12 ou 13, **caractérisée en ce que** l'on utilise pour l'élaboration du système de revêtement(s) de base et/ou de surface, une ou plusieurs dispersion(s) de polyuréthane sur la base des composants (A) à (D) et éventuellement d'autres polymères et/ou résines réactives comme liant.

**15.** Utilisation selon l'une quelconque des revendications 12 et 14, **caractérisée en ce que** l'application comme revêtement de base ou de surface s'effectue en une ou plusieurs couches en une quantité totale de 1 à 1000 $g.m^{-2}$ de la surface à revêtir et par cycle de travail.

**16.** Utilisation selon l'une quelconque des revendications 12 à 15, **caractérisée en ce que** l'application comme revêtement de base ou de surface s'effectue en une ou plusieurs couches avec une épaisseur de couches sèches totale de 5 à 500 µm.

**17.** Utilisation selon l'une quelconque des revendications 12 à 16, **caractérisée en ce que**

$b_1$) on colle les matériaux contreplaqués et/ou d'autres matériaux de revêtement sur un matériau aveugle et/ou de matériau de support éventuellement profilé avec des colles appropriées,

$b_2$) on soumet la pièce de l'étape $b_1$) à un ponçage et un dépoussiérage et on la traite éventuellement par application d'agents de d'élimination de résine et/ou d'agents éclaircissants et/ou d'agents teintants et de mordant et/ou d'agents de bouchage des pores et éventuellement par séchage forcé,

$b_3$) on applique la dispersion de polyurtéhane (revêtement de post-formage) de l'étape $a_4$), $a_5$) ou $a_6$) éventuellement en combinaison avec d'autres polymères et/ou résines réactives en une ou plusieurs couches comme revêtement de base ou de surface éventuellement pigmenté sur la pièce de l'étape $b_1$) par application par coulage, pulvérisation ou laminage ou on la sèche éventuellement par séchage forcé, on la durcit éventuellement au moyen d'une polymérisation radicalaire induite par rayons UV et on la soumet éventuellement à un ponçage de placage et un dépoussiérage et l'on répète éventuellement ces étapes du procédé, les étapes $b_1$), $b_2$, et $b_3$ pouvant être réalisées dans un ordre quelconque,

$b_4$) on soumet la pièce revêtue des étapes $b_1$) à $b_3$) à un procédé direct de post-formage ou un procédé normal de post-formage et enfin,

$b_5$) on refroidit et empile la partie formée terminée de l'étape $b_4$).

**18.** Utilisation selon la revendication 17, **caractérisée en ce que**, en variante à l'étape $b_2$), le radio-durcissement s'effectue uniquement après l'étape $b_4$) au moyen d'une polymérisation radicale induite par UV.

**19.** Utilisation selon la revendication 17, **caractérisée en ce que**, en variante à l'étape $b_3$), l'application de la dispersion de polyuréthane formulée (revêtement de post-formage) de l'étape $a_4$) $a_3$) ou $a_6$) s'effectue à deux composants en combinaison avec des durcissants appropriées.

**20.** Utilisation selon l'une quelconque des revendications 12 à 19, **caractérisée en ce que**, en fonction de la capacité de déformation des contreplacages ou des matériaux de revêtement à traiter, des rayons de courbure de 1 à 100 mm, de préférence de 5 à 6 mm, sont produits.

**21.** Utilisation selon l'une quelconque des revendications 12 à 20, **caractérisée en ce que**, en fonction de la capacité de déformation des contreplacages ou des matériaux de revêtement à traiter, la déformation est réalisée sans évaporation ou humidification.

**22.** Utilisation selon l'une quelconque des revendications 12 à 21, **caractérisée en ce que**, une fois la déformation réalisée, s'effectue encore un durcissement consécutif par auto-réticulation;

**23.** Utilisation selon l'une quelconque des revendications 12 à 22, **caractérisée en ce que** la dispersion de polyuréthane de l'étape $a_4$), $a_5$) ou $a_6$) est utilisée comme adhésif pour coller les contreplacages ou d'autres matériaux de revêtement avec des matériaux aveugles et/ou des matériaux de support quelconques.

**24.** Utilisation selon l'une quelconque des revendications 12 à 23, **caractérisée en ce que** la dispersion de polyuréthane de l'étape $a_4$), $a_5$) ou $a_6$) est utilisée également pour la stratification, le revêtement, la technique de compression de membrane, le soft-formage sur machines encolleuses de chants, la déformation de matériaux quelconques comme par exemple les plaques d'OSB laquées.

**25.** Utilisation selon l'une quelconque des revendications 12 à 24 comme revêtement de base ou de surface pour contreplaqué sous la forme de meubles, de fenêtres, de liteaux, de portes, de cadres, de parquets, de parquet de placage ainsi que d'autres produits préfabriqués, des éléments de post-formage et des éléments formés, de géométrie quelconque.

**26.** Utilisation selon l'une quelconque des revendications 12 à 25, **caractérisé en ce que** le contreplacage est du bois massif à base de hêtre, d'if, d'épicéa, de pin, de mélèze, de sapin, de pin de l'Himalaya, de pin Cembo, d'érable, de bouleau, de poirier, de chêne, d'aulne, de frêne, de cerisier, de tilleul, de noyer, de peuplier, de platane, d'ormeau/orme, de pin du Parana, d'abachi, de kokrodua, de doussie, d'ébène/ébène macassa, de limba, d'acajou, de makore, de mansonia, d'okoumé/angouma, de padouk, de palissandre des Indes, de palissandre du Brésil, de ramin, de bois de rose, de sapelli/acajou sapelli, de sen, de sipo, de teck, de wenge, de tulipier ou de zingana/zebrano.

**27.** Utilisation selon l'une quelconque des revendications 12 à 26, **caractérisée en ce que**, comme revêtement de base, on utilise la dispersion de polyurétahne (revêtement de post-formage) de l'étape $a_4$), $a_5$)ou $a_6$) et comme revêtement de surface, on utilise de la peinture acrylique en une ou plusieurs couches.

**28.** Utilisation selon l'une quelconque des revendications 12 à 27, **caractérisée en ce que** les matériaux aveugles et/ou les matériaux de support sont le bois, les matériaux dérivés du bois de toutes sortes, les matières plastiques de toutes sortes, les métaux de toutes sortes, les matériaux MDF, HDF ou matériaux composites de toutes sortes.